# EUROPÄISCHE PATENTSCHRIFT

(11) **EP 1 303 353 B1**
(45) Veröffentlichungstag und Bekanntmachung des Hinweises auf die Patenterteilung: **13.02.2008**
(21) Anmeldenummer: 01969514.7
(22) Anmeldetag: 25.07.2001
(51) Int. Cl.: G01N 21/64

(54) **VERFAHREN UND VORRICHTUNG ZUM ANALYSIEREN VON CHEMISCHEN ODER BIOLOGISCHEN PROBEN**
METHOD AND DEVICE FOR ANALYSING CHEMICAL OR BIOLOGICAL SAMPLES
PROCEDE ET DISPOSITIF D'ANALYSE D'ECHANTILLONS CHIMIQUES OU BIOLOGIQUES

(30) Priorität: 25.07.2000 DE 10036174
(43) Veröffentlichungstag der Anmeldung: 23.04.2003
(73) Patentinhaber: AXARON Bioscience AG, 69120 Heidelberg (DE)
(72) Erfinder: MÜLLER, Ralph, 69412 Eberbach (DE)
(74) Vertreter: Müller, Jörg Uwe
(86) Internationale Anmeldenummer: PCT/EP2001/008618
(87) Internationale Veröffentlichungsnummer: WO 2002/008457

(56) Entgegenhaltungen:
- WO-A-00/40334
- WO-A-87/07384
- DE-A- 19 852 835
- US-A- 3 932 131
- US-A- 4 090 848
- US-A- 4 144 452
- US-A- 4 740 313
- PATENT ABSTRACTS OF JAPAN vol. 011, no. 264 (P-610), 27. August 1987 (1987-08-27) & JP 62 069164 A (NITSUTEKU:KK), 30. März 1987 (1987-03-30)

## Beschreibung

Die Erfindung betrifft ein Verfahren und eine Vorrichtung zum Analysieren von chemischen oder biologischen Proben. Speziell betrifft die vorliegenden Erfindung ein neuartiges Trägersystem für chemische oder biologische Assays, insbesondere zur Verwendung in der DNA- oder RNA-Analytik, wobei die zu immobilisierenden biologischen Sonden oder Proben beispielsweise DNA, RNA, cDNA, Oligonukleotide oder PNA-Oligos sein können.

Das Auffinden neuer bzw. Wiedererkennen bekannter genetischer Informationen ist eine elementare molekularbiologische Aufgabenstellung, zu deren Lösung bereits eine große Zahl unterschiedlicher Methoden vorgeschlagen wurde. Um die enorme genetische Information biologischer Systeme handhaben zu können, kommen verstärkt Hochdurchsatznachweistechniken zum Einsatz. Ein populärer Vertreter ist der DNA-CHIP bzw. das DNA-Array, das bei einer hohen Dichte aufgetragener Sonden (> 1000 pro cm²) eine simultane Analyse vieler tausend Proben erlaubt. Hierbei wird vorwiegend ein konventioneller Mikroskopglasobjektträger mit seiner planaren Oberfläche, die mit DNAbindenden Reagenzien beschichtet ist, verwendet. Die aufgetragenen und gebundenen Sonden werden bei genomischen Anwendungen Targetsequenzen oder Targets genannt. Häufig sind die Targets bereits genetisch identifiziert, so dass die Gensequenz - in vielen Fällen auch die physiologische Funktion der Targets im jeweiligen Organismus bekannt ist. Mit dieser Targetvorinformation lassen sich neue Systeme abfragen, Verwandtschaften bzw. Andersartigkeiten feststellen, Klassifizierungen vornehmen oder biologische Aufgabe und Funktion des Systems untersuchen. Das zu untersuchende biol. System wird als Probe auf den Objektträger aufgebracht und anschließend hybridisiert. Dabei finden sich Target-DNA, die auf der Trägeroberfläche fixiert ist und zum Target komplementäre Proben-DNA und gehen eine Verbindung ein. Ist die Proben-DNA beispielsweise durch einen Farbstoff markiert, so lässt sich anschließend das Target nachweisen und durch den Ort bzw. die Position auf dem DNA-Array eine Zuordnung zur Vorinformation des Targets erreichen. Komplexe genetische Informationen lässt sich mittels der Hybridisierung eines DNA-Arrays qualitativ und/oder quantitativ analysieren.

Klassische Anwendungen dieser Art sind Northern- und Southern-Blots, sowie die *in-situ* Hybridisierung. Dazu werden die Proben in der Regel zweckgerecht vorbereitet und mit Hilfe definierter DNA-Targets untersucht. Zur Markierung der Proben werden Substanzen, sog.

Marker, eingesetzt, die mit Hilfe geeigneter Nachweismethoden identifiziert werden können. Weit verbreitet sind insbesondere radioaktive Marker, sowie Chemilumineszenz- oder Fluoreszenzmarker. Dabei haben insbesondere Fluoreszenzmethoden in der chemischen und biologischen Analytik und Diagnostik einen hohen Stellenwert. Es handelt sich dabei um eine sehr nachweisstarke Methode, die ohne Radioaktivität und, falls erforderlich, ohne toxische Substanzen auskommt.. Es existieren heute empfindliche Detektionssysteme, die schon den Nachweis einzelner fluoreszierender Moleküle ermöglichen. Außerdem existiert eine Vielfalt unterschiedlichster Fluoreszenzfarbstoffe, so dass für die meisten Wellenlängenbereiche im sichtbaren Spektrum, aber auch im angrenzenden ultravioletten und infraroten Spektralbereich auf geeignete Fluoreszenzmarker zurückgegriffen werden kann. Häufig können bei einer Messung sogar mehrere Fluoreszenzfarbstoffe mit unterschiedlichen Anregungs- und/oder Emissionswellenlängen parallel verwendet werden.

Unter einem feste Träger versteht man im vorliegenden Fall ein Material mit starrer oder halbstarrer Oberfläche. Bei derartigen Trägern kann es sich beispielsweise um Partikel, Stränge, insbesondere Faserbündel, sphärische Körper, wie Kugeln oder Kügelchen, Fällungsprodukte, Gele, Blätter, Röhren, Behältnisse, Kapillaren, Scheiben, Folien oder Platten handeln. Üblicherweise werden ebene Träger verwendet.

Durch fortschreitende Miniaturisierung konnten die DNA-Felder mittlerweile wesentlich verkleinert werden, so dass man heute eine Vielzahl verfahrens- und meßtechnisch unterscheidbarer Felder auf einem einzelnen Träger ordnen kann. In Anlehnung an die Halbleitertechnologie wird daher auch von Chips, insbesondere von BioChips, GenChips etc., gesprochen. Die Targets sind in möglichst hoher Dichte an den Träger gebunden Vor allem hat die Anwendung photolithographischer Fabrikationstechniken aus der Halbleitertechnologie zu entscheidenden Fortschritten bei der Herstellung solcher Chips geführt. Das Prinzip basiert auf einer lichtgesteuerten chemischen Festphasensynthese, bei der photolithographische Masken die Felder abbilden (vgl. beispielsweise Fodor et al, "Lightdirected, spatially addressable parallel chemical synthesis", Science, vol. 251, 767-773 (1991)). Dieses Verfahren ist insbesondere dann von Vorteil, wenn die Target-DNA auf dem Träger *in-situ* aus einzelnen Nukleotiden, aufgebaut werden sollen. So kann ein bestimmter Baustein gezielt an die im Aufbau befindlichen Targets bestimmter Felder angefügt werden, während die Sonden der übrigen Felder unberührt bleiben. Auf diese Weise lassen sich in großem Maßstab DNA-Oligochips herstellen, die kombinatorisch genutzt das Auffinden neuer Sequenzen erlauben. Zum Wiedererkennen gesuchter Sequenzen benötigt der Oligosynthesechip eine aufwendige Mustererkennung. Verfahren hierzu werden ausführlich in den internationalen Patentanmeldungen WO 90/15070, W0 91/07087, W0 92/10092, WO 92110587, WO 92/10588 und in dem U.S.-Patent 5,143,854 beschrieben.

Im Unterschied zu den Synthesearrays werden in der Praxis verstärkt Spotting-Arrays genutzt, bei denen die zuvor erzeugte DNA-Sequenz komplett auf den Träger übertragen wird. Zum Aufbringen der DNA-Lösung werden unterschiedliche Verfahren, wie das Ink-jet-Spotting, das Solid-Pin-Spotting oder das Micro-Printing verwendet. Derartige Arrays eignen sich für eine Vielzahl von Anwendungen, angefangen von der Sequenzierung von DNA und Proteinen bis zum DNA-Fingerprinting und der Krankheitsdiagnostik. Inzwischen werden kommerzielle Biochips mit einer Vielzahl verschiedener cDNAs zur Hybridisierung angeboten. Bei diesen cDNAs handelt es sich um Nukleinsäuresequenzen mit Längen von etwa 200 bis 600 Basenpaaren (bp. Gerade im Bereich der Genexpressionsprofilierung, also der Erkennung des Aktivitätszustandes interessierender Gene ist der Spottingchip prädestiniert. Dabei wird stets eine Kontroll-DNA-Pool mit einem stimulierten DNA-Pool verglichen und somit Veränderungen in der Genaktivität für die jeweilige Fragestellung oder das betreffende biologische Modell eruiert. Speziell zum Auffinden relevanter Biomoleküle, die bspw. eine Schlüsselrolle im Organismus haben, werden vermehrt Chip-Technologien eingesetzt.

Zwar können auf diesen planaren Chips sehr viele verschiedene Substanzen oder Moleküle immobilisiert werden, jedoch weisen heute bekannte DNA-Arrays immer noch Probleme bei der Handhabung und Anwendbarkeit auf. Ursache für diese Probleme ist im wesentlichen die mangelnde Reproduzierbarkeit des aus vielen Einzelschritten bestehenden Gesamtprozesses.

Außerdem erfolgt der laterale Austausch von Substanzen in der auf den Chip aufgebrachten Probenflüssigkeit rein diffusionskontrolliert, so dass - zumindest innerhalb einer praktikablen Gesamtmeßdauer - nicht gewährleistet ist, dass jede Spezies der Probenflüssigkeit mit jeder auf der Chipoberfläche immobilisierten Probenspezies wechselwirken kann.

Abgesehen von den oben erwähnten planaren Systemen wird in der deutschen Patentanmeldung DE 198 28 837 A1 die Verwendung von Miniholzylindem als Festphase für ELISA-Tests in Mikrotiterplatten beschrieben. Ein Aufbringen einzelner definierter Spots auf diese Miniholzylinder wird aber nicht offenbart.

Schließlich ist aus US 5,427,948 eine Vorrichtung zum Hybridisieren von DNA-Fragmenten bekannt, wobei die DNA-Fragmente auf einer Membran immobilisiert sind. Die einzelnen Spots werden auf die planare Membran aufgebracht, so dass die Herstellung der Arrays und deren Auswertung im wesentlichen den von herkömmlichen planaren Biochips her bekannten Methoden entspricht. Lediglich zur Durchführung der eigentlichen Hybridisierung wird die Membran in eine verschließbare Behandlungstrommel eingelegt, die aus zwei ineinander verschachtelten Zylindern besteht. Ein automatisierbarer Prozessablauf ist mit einer derartigen Vorrichtung nicht möglich.

WO-A-0040334 (Figs. 20-29; S. 32-39) liegt auf dem Gebiet der DNA /RNA Analytik und offenbart verschiedene Mikroarrays zum Kontaktieren von chemischen oder biologischen Proben mit entsprechenden Targets. Eine der Hauptausführungsformen (Figs. 20-29) betrifft eine Anordnung, wobei eine Mehrzahl von optischen Fasern 2011 auf der Mantelfläche eines Zylinders ("Rad" 2000 - Fig. 20) angeordnet sind - die Fasern verlaufen parallel zur Zylinderachse und tragen auf ihren Oberflächen immobilisierte chemische / biochemische Spezies. Der Zylinder wird in einen Halter 2300 (Fig. 23, 27) mit einer komplementären Ausnehmung eingeführt, wodurch eine ringförmige Spalte gebildet wird, die von mobilen Spezies 2310 über Leitungen 2401 gefüllt wird - der Träger und der Halter werden anschließend in entgegengesetzten Richtungen rotiert. Eine Lichtquelle 2704 führt Licht in die Fasern ein (Fig. 27) und emittiertes Fluoreszenzlicht senkrecht zu den Faserachsen wird durch die Halterwände auf einen Detektor fokussiert. Durch Rotation des Zylinders kommen die Fasern nacheinander in die Position der optischen Auswertungsanordnung. Bezüglich dieser Ausführungsform offenbart WO-A-0040334 weiterhin auf Seite 39, daß bei dem Radsystem die Fasern durch ein Array von immobilisierten Spots von chemischen Spezies ersetzt werden könnten, vorzugsweise als zylindrisches Mikroarray direkt auf der Mantelfläche des Rades.

Aufgabe der vorliegenden Erfindung ist es daher, ein verbessertes Verfahren und eine entsprechende Vorrichtung zum Analysieren von chemischen oder biologischen Proben bereitzustellen, so dass ein standardisierbarer, vollautomatischer Prozeßablauf gewährleistet wird. Außerdem soll das Verfahren und die Vorrichtung der Erfindung gewährleisten, dass ein zu analysierendes Probenvolumen zuverlässig mit jeder Sonde wechselwirken kann.

Gelöst wird diese Aufgabe durch die Vorrichtung des vorliegenden Anspruchs 1 Verwendung des Vorrichtung gemäß dem vorliegenden Anspruch 24 und das verfahren gemäß dem Anspruch 25. Vorteilhafte Weiterbildungen des erfindungsgemäßen Verfahrens und der erfindungsgemäßen Vorrichtung sind Gegenstand der abhängigen Ansprüche.

Kern der Erfindung ist demnach eine Vorrichtung umfassend u.a. neuartiges Trägersystem zur Untersuchung von chemischen oder biologischen Proben, das sich durch eine zylindrische Geometrie auszeichnet, wobei auf der funktionalisierten Mantelfläche des Zylinders bzw. in in dem Zylindermantel ausgesparte radiale Bohrungen Substanzen aufgebracht, beispielsweise immobilisiert werden können. Durch Zusammenwirken mit einem komplementären Halter wird ein Analysesystem mit eindeutig definierten Reaktionsvolumina realisiert, das - im Gegensatz zu planaren Biochips - einfach standardisierbar und hochgradig automatisierbar ist.

Im Folgenden wird der Einfachheit halber meist auf "Spots" Bezug genommen, wobei dann je nach Zusammenhang sowohl die auf die Manteloberfläche aufgebrachten Proben, als auch die in die Bohrungen eingebracht Fluidtröpfchen gemeint sein können.

Beispielsweise kann man den Träger zum Aufbringen der Spots in einer kombinierten Translations- und Rotationsbewegung an einer Aufgabeeinrichtung vorbeiführen, so dass die Spots entlang von schraubenförmigen Bahnen auf der Mantelfläche angeordnet werden. Dazu kann man beispielsweise an sich bekannte, hochpräzise Gewindespindel-Mutter-Triebe verwenden. Jeder Spot ist dann auf der Mantelfläche oder in der Bohrung eindeutig lokalisierbar. Bevorzugt verwendet man eine am Eingang des Halters angeordnete Aufgabeeinrichtung zur Aufbringung der Spots und führt den Träger beim Aufbringen der Spots in den Halter ein, so dass unmittelbar im Anschluß daran Reaktionsfluide über die Mantelfläche gespült werden können. Man kann jedoch auch eine externe Aufgabeeinrichtung verwenden und zunächst alle Spots aufbringen, bevor man den Träger in den Halter einführt.

Anschließend kann man die in den Spots aufgebrachten Substanzen geeignet chemisch oder physikalisch beeinflussen, beispielsweise DNA-Targetspots mit Proben-DNA eines über die Mantelfläche geleiteten Probenfluids hybridisieren, und anschließend analysieren.

Sind bei einer Variante der Offenbarung radiale Bohrungen in der Mantelfläche ausgespart, die mit einer in dem Träger vorgesehen Zentralbohrung kommunizieren, so kann man zur chemischen und/oder physikalischen Beeinflussung der Proben oder Targets die in die Bohrungen eingebrachten Fluidtröpfchen mit einem in der Zentralbohrung und/oder zwischen der Mantelfläche und dem Träger befindlichen Fluid vermischen. Man kann also gleichzeitig oder zeitlich versetzt mindestens zwei unterschiedliche Fluide mit den Probenfluidtröpfchen vermischen. In die Zentralbohrung kann auch ein fester Kern eingeführt werden, der dann einen Boden für die radialen, in der Mantelfläche ausgesparten Bohrungen bilden.

Zum Analysieren der Spots führt man den Träger in einer kombinierten Translations- und Rotationsbewegung an einer Detektionseinrichtung vorbei. Dabei wird die Bewegungsrichtung des Trägers vorteilhaft so umgekehrt, dass der Träger aus dem Halter entfernt wird. Die zuvor aufgebrachten Spots werden dann entlang der gleichen schraubenförmigen Bahn an der Detektionseinrichtung vorbeigeführt, was die Standardisierung und Automatisierung der Prozesse erleichtert.

Gemäß einer besonders bevorzugten Ausführungsform der Erfindung bringt man Targestspots in wenigstens eine in der Mantelfläche des Trägers ausgesparte schraubenförmig vertiefte Gewindebahn ein. Die Targets werden also, ähnlich wie bei herkömmlichen planaren biologischen Arrays, auf die Oberfläche eines Trägers aufgebracht. Dann schraubt man den Träger in den mit einem entsprechenden Gegengewinde versehenen Halter ein und fördert wenigstens ein Probenfluid durch einen entlang der Bahn definierten Kanal. Dabei können die in dem Probenfluid enthaltenen Substanzen mit den Sonden des Trägers wechselwirken, im Fall von DNA-Untersuchungen beispielsweise hybridisieren. Ein besonderer Vorteil einer Ausführungsform des erfindungsgemäßen Verfahrens gegenüber der herkömmlichen Verwendung planarer Arrays besteht darin, dass durch die vom Träger und Halter realisierte Schrauben/Mutter-Geometrie ein - im Querschnitt zu der Bahn - sehr kleines Reaktionsvolumen definiert wird. Proben und Targets können daher auch bei rein diffusionskontrollierten Prozessen sehr schnell ablaufen, was kurze Meßzeiten ermöglicht. Gleichzeitig ist durch den Transport des Probenfluids durch die Schraubenbahn gewährleistet, dass das zu analysierendes Probenvolumen zuverlässig mit jeder Sonde wechselwirken kann. Schließlich schraubt man den Träger wieder aus dem Halter heraus und detektiert vorzugsweise beim Herausschrauben die zwischen den Sonden und dem Probenfluid aufgetretenen Wechselwirkungen.

Dabei kann man das Probenfluid durch die beim Einführen des Trägers in den Halter resultierende Verdrängerwirkung des Trägers durch den Kanal fördern. Dazu füllt man das Probenfluid vor dem Einführen des Trägers entweder manuell, durch Pipettierroboter oder durch geeignete, in den Halter integrierte Fluidleitungen in den Innenraum des Halters und stellt zwischen dem Kanal und dem Innenraum eine kommunizierende Fluidverbindung her. Man kann das Probenfluid - und gegebenenfalls weitere Reaktionsfluide - aber auch mittels einer Pumpe durch den Kanal fördern. Man kann die Fluide auch am Ende des Kanals absaugen und gegebenenfalls für einen weiteren Durchlauf zum Kanaleingang zurückführen.

Vorteilhaft werden die Targets vor der Analyse der Proben in dem Kanal des Trägers oder in den radialen Bohrungen immobilisiert. Dabei kann man herkömmliche, von planaren Arrays her bekannte Techniken zurückgreifen. Die Targets kann man beispielsweise als definierte Spots beim Einschrauben des Trägers in den Halter aufbringen. Durch Computersteuerung des Prozesses ist jeder Sondenspot einer definierten Position im Gewindegang des Halters zugeordnet, die bei der Auswertung der Messung zu Identifikation der an dieser Stelle aufgetretenen Wechselwirkung zwischen Target und Probe herangezogen werden kann. Sondenspots werden auf den Bahnen, also beispielsweise dem Gewindegang, vorzugsweise in Form eines linearen Arrays immobilisiert. Die Targetspots besitzen vorzugsweise einen Durchmesser zwischen 10 und 200 µm und werden bevorzugt mit einer Längendichte von 10 bis 500 Spots/cm, besonders bevorzugt 25 bis 200 Spots/cm aufgebracht.

Im Fall einer Trägers mit radialen Bohrungen kann man auch hochgeordnete molekulare Monoschichten auf der Innenwand der Bohrungen aufbringen. Nach einem an die herkömmliche Langmuir-Blodgett-Technik angelehnten Verfahren lässt man einen Flüssigkeitsmeniskus in die Bohrungen eindringen, deren Innenwand hydrophil ist, so dass die Flüssigkeit die Innenwand benetzen kann. Auf der Flüssigkeitsoberfläche kann man eine monomolekulare Schicht amphiphiler Moleküle ausbilden. Diese Schicht wird beim Zurückziehen des Flüssigkeitsmeniskus aus der Bohrung auf die Innenwand der Bohrung übertragen.

Das erfindungsgemäße Verfahren eignet sich besonders zur DNA-Hybridisierung bzw. RNA-Hybridisierung. Bevorzugt werden daher DNA/RNA-Targets auf dem Träger immobilisiert und mit in dem Probenfluid enthaltender DNA/RNA-Proben hybridisiert.

Besonders vorteilhaft werden gemäß bestimmten Ausführungformen der Erfindung fluoreszenzmarkierte Proben verwendet, so dass Wechselwirkungen zwischen Sonden und Proben bzw. die elektrophoretische Auftrennung der Proben optisch analysiert werden können. Zur Markierung können alle Fluoreszenzfarbstoffe verwendet werden, die chemisch mit der zu markierenden Substanz gekoppelt werden können. Dazu kann beispielsweise ein Anregungs- und Detektionssystem in den Halter integriert sein.

Eine Variante des Trägersystems erlaubt den Einsatz in der Gelelektrophorese. Speziell die DNA-Sequenzierung fordert durch die massive Information biologischer Systeme einen hochparallelen Ansatz. Gängig sind z. Zt. die DNA-Sequenzierung in flachen Gelelektrophoresekammern (Flachgel) mit bis zu 100 parallelen Analysespuren oder für noch höheren Durchsatz die DNA-Separation in Gelkapillaren mit etwa gleichem Parallelisierungsgrad aber kürzerer Analysezeit. In den Gelkapillaren wird eine spezielle Polymerlösung verwendet, die die Auftrennung der aufbereiteten DNA bewerkstelligt. Die Polymerlösung erlaubt allerdings nicht so hohe Trennleistungen wie bei den Flachgelen übliche quervernetzte Gele. In der Kapillarelektrophorese wird nach der Analyse die Lösung mit Druck aus der Kapillare entfernt, und so für den nächsten Sequenzlauf vorbereitet - vernetzte Gele lassen sich nicht mehr aus der Kapillare entfernen.

Gemäß der vorliegenden Offenbarung wird nun vorgeschlagen, einen Träger zu verwenden, in dessen Mantelfläche mehrere parallele, gelbeschichtete Bahnen ausgespart sind, die Probenspots auf definierte Bereiche der Bahnen aufzubringen, nach dem Einführen des Trägers in den Halter die in den Probenspots enthaltenen Substanzen elektrophoretisch voneinander zu trennen und anschließend die aufgetrennten Substanzen zu detektieren. Die Bahnen können beispielsweise im wesentlichen parallel zur Mantellinie des Trägers verlaufen. Sie können aber auch schraubenförmig auf der Mantelfläche des Trägers verlaufen, so dass bei gleichen Außenmaßen des Trägers eine längere Laufstrecke zur Verfügung steht. Es lassen sich in einer multihelikalen Anordnung auch zahlreiche parallel laufende Schraubenbahnen realisieren. Nutzt man einen schraubenförmigen Träger der multihelikal ausgeführt ist, so lassen sich Kapillarbahnen realisieren, die mit einem Gegengewindekranz automatisiert gesäubert werden können, so dass sich Kapillaren mit vernetzten Gelen kombinieren lassen, was die kurze Analysenzeit mit der hohen Trenngüte verbindet. Zudem lässt sich in der multihelikalen Anordnung ein hoher Parallelisierungsgrad erzielen von beispielsweise über 600 helikale Gelbahnen auf einem Träger von 1 cm Radius. Auch die optische Anregung und Detektion kann einfach an dem mit konstanter Winkelgeschwindigkeit bewegten zylindrischen Träger erreicht werden. Auf diese Weise lassen sich zirka 10 mal mehr Sequenzdaten pro Zeiteinheit ermitteln als Geräte nach heutigem Stand der Technik mit höchstem Durchsatz erreichen.

Gegenstand der vorliegenden Erfindung ist eine Vorrichtung zum Analysieren von chemischen oder biologischen Proben, die sich insbesondere zur Durchführung des erfindungsgemäßen Verfahrens eignet. Die Vorrichtung umfaßt u.a. einen Träger, der eine im wesentlichen zylindrische Mantelfläche aufweist, die auf wenigstens einem Teil ihrer Fläche derart funktionalisierbar ist, dass chemische oder biologische Targets oder Proben aufgebracht werden können, einen Halter, der eine im wesentlichen zylindrische Ausnehmung aufweist, in welche der Träger einführbar ist.

Vorteilhaft sind außerdem Mittel zum Fördern von Fluiden durch wenigstens einen zwischen der Mantelfläche des Trägers und der Innenfläche der Ausnehmung definierten Kanal vorgesehen. Die Mittel zum Fördern von Fluiden umfassen vorteilhaft wenigstens ein Fluidreservoir und eine Pumpeinrichtung, mit der das Fluid durch den Kanal gefördert werden kann. Gemäß einer Möglichkeit werden die Mittel zum Fördern von Fluiden von dem als Kolben wirkenden Träger und der als Fluidreservoir dienenden Ausnehmung des Halters gebildet. Dazu kann der Träger stirnseitig einen gewindelosen zylindrischen Abschnitt umfassen, dessen Außendurchmesser im wesentlichen dem Innendurchmesser der Ausnehmung des Halters entspricht. In dem gewindelosen zylindrischen Abschnitt kann ein Durchlaß ausgespart sein, der einerseits mit dem Gewindegang des Trägers und andererseits, bei eingeschraubtem Träger, mit der Ausnehmung des Halters kommuniziert. Beim Einschrauben des Trägers wird das Probenfluid aus der Ausnehmung verdrängt und strömt durch den Durchlaß in den Gewindekanal. Die Mittel können über ein Proben-Auffangsystem am Ausgang des Träger zurückgewonnen werden und zyklisch umgepumpt werden. Gemäß einer zweiten Möglichkeit werden die Mittel in ein externes Schlauchsystem appliziert und durch ein externes Pumpensystem durch den schraubenförmigen Kanal gepumpt. Die Mittel können über ein Proben-Auffangsystem am Ausgang des Träger zurückgewonnen werden und zyklisch umgepumpt werden.

Gemäß einer Variante der offenbarten Vorrichtung kann der funktionalisierbare Teilbereich der Mantelfläche des Trägers als radiale Bohrungen in der Mantelfläche ausgebildet sein. Hierbei kann es sich um Blindbohrungen handeln, die Kavitäten der in Mantelfläche bilden. Bevorzugt kommunizieren die radialen Bohrungen aber mit einer entlang der Längsachse des Trägers verlaufenden Zentralbohrung. In diese radialen Bohrungen können definierte Mengen an Probenfluiden eingebracht werden, die dort durch Kapillarkräfte gehalten werden.

Vorteilhaft sind außerdem Mittel zum Aufbringen der Targets oder Proben in Form von einzelnen definierten Spots vorgesehen, die beispielsweise als Pins ausgebildet sein können, mit denen man kleinste Fluidmengen an definierten Stellen einer entsprechend funktionalisierten Oberfläche aufbringt oder in eine funktionalisierte Bohrung einführt.

In der Mantelfläche des Trägers ist bevorzugt wenigstens eine funktionalisierbare Bahn oder Bohrung ausgespart. Die Bahn (oder die Bahnen) können im wesentlichen parallel zur Mantellinie des Trägers verlaufen. Die Innenwand des Halters kann in diesem Fall glatt sein. Ein solcher Träger eignet sich insbesondere für elektrophoretische Untersuchungen bzw. zur DNA-Sequenzierung. Nachgeordnet kann man einen Kranz mit Innenzähnen vorsehen, der bei weiterem Vorschub die vernetzten Gele in aus den Bahnen entfernen kann. Die Bahnen können aber auch schraubenförmig auf der Mantelfläche des Trägers verlaufen. Durch diese geometrische Anordnung wird eine hohe Kanallänge erreicht, die eine deutlich größere Anzahl an abgelegten Targets erlaubt als eine planare Oberfläche, beispielsweise eine doppelt so hohe Anzahl.

Gemäß einer vorteilhaften Ausführungsform bildet die schraubenförmige Bahn auf der Mantelfläche des Trägers eine Gewindebahn und die zylindrische Ausnehmung des Halters weist ein komplementäres Gegengewinde auf, das so ausgestaltet ist, dass nach Einschrauben des Trägers in den Halter entlang der Gewindebahn ein Kanal gebildet wird, durch den Probenfluid gefördert werden kann. Die Gewindebahn besitzt vorteilhaft ein im wesentlichen rechteckiges oder trapezförmiges Gewindeprofile besitzt oder ist als metrisches ISO-Gewinde, Rundgewinde oder Rohrgewinde ausgebildet.

Bevorzugt umfaßt die Antriebseinrichtung zum automatischen Einschrauben des Trägers in den Halter und zum Ausschrauben aus dem Halter einen Schrittmotor, einen Servomotor oder einen Synchronmotor. Der Motor kann über eine Getriebe mit dem Träger gekoppelt sein. Im Fall eines Trägers mit im wesentlichen nahezu axial verlaufenden Bahnen genügt es, wenn die Antriebseinrichtung den Träger axial in den Halter schiebt. Ein schraubenförmige Bewegung ist in diesem Fall in Abhängigkeit der Gewindesteigung nur im Rahmen des Systemspiels erforderlich. Als Antriebseinheit kann ein Linearantrieb oder ein Hydrauliksystem dienen.

Vorteilhaft sind der Träger und/oder der Halter und/oder der in eine Zentralbohrung des Trägers einführbare Kern temperierbar im Bereich von 0°C bis 100°C.

Die Gewindebahn des Trägers oder die Innenwand der radialen Bohrung weist bevorzugt eine Oberfläche aus einem Material auf, das ausgewählt ist aus der Gruppe bestehend aus Glas, insbesondere Quarzglas, Kohlenstoff, Kunststoffen (insbesondere fluoreszenzarmen Polymermaterial) oder Harzen, wie Polytetrafluorethylen, Poylvinylidendifluorid, Polystyrol oder Polycarbonat, PMMA darunter membranbildende Materialien, wie Nitrocellulose oder Nylon sowie monomolekulare Filme amphiphiler Moleküle, wie Langmuir-Blodgett-Filme, die aus Stabilitätsgründen vorzugsweise polymerisiert sind, Metall, insbesondere Gold, Platin, Chrom oder Kupfer, Halbleitermaterialien, wie Si, Ge, GaAs oder GaP, bevorzugt in einkristalliner Form und Keramiken. Die Träger können aus einem einheitlichen Material sein; speziell Kunststoffe werden vorzugsweise als einheitliches, modifiziertes bzw. durchgehend funktionalisiertes Material eingesetzt, so dass es keiner weitem Oberflächenbehandlung bedarf; es kann sich aber auch um Verbundwerkstoffe handeln, bei denen die Oberfläche die vorstehend genannten Kriterien erfüllt. Bevorzugt werden Oberflächen, die funktionelle Gruppen, wie Carboxyl-, Amino- oder Hydroxylgruppen, aufweisen. Insbesondere bevorzugt sind Gläser, SiO₂ und halbleitende Materialien, insbesondere Si und modifiziertes Si. Die Auftragung kann durch Einspülen der Oberflächen-Reagenzien in den Probenkanal und evtl. einen anschließenden Trocknungsvorgang durch Einfahren des Träger in einen Verdränger-Halter erfolgen.

Je nach aufzubringender Sonde kann die Oberfläche der Gewindebahn des Trägers außerdem eine, vorzugsweise hydrophobe, Deckschicht oder sogenannte Spacer und/oder Linker aufweisen. Über die Länge und Art, beispielsweise die Polarität eines Spacers kann die Wechselwirkung, beispielsweise der Mobilitätsgrad, zwischen Sonde und Probe, etwa einer Hybridisierungsprobe, beeinflußt werden. Eine Optimierung des Spacers im Hinblick auf größtmögliche Accessibilität der Sonde ist dabei von Vorteil. Als Spacer eignen sich beispielsweise difunktionelle Verbindungen, wie Diamine, Disäuren, z.B. Dicarbonsäuren, oder Ethylenglycol-Oligomere, heterobifunktionelle Verbindungen, wie Aminosäuren, Arylacetylene, funktionalisierte Kopfgruppen polymerisierter Langmuir-Blodgett-Filme, Lectine, Biotine, Avidine, Strepavidine oder Kombinationen davon. Spacer können auch aus mehreren Teilen aufgebaut sein, die miteinander durch kovalente und/oder nichtkovalente Bindungen verknüpft sind. Beispiele für kovalent verknüpfbare Teile eines Spacers sind heterobifunktionelle Elemente, wie Aminosäuren, beispielsweise 6-Aminocaprinsäure oder - Aminobuttersäure, von denen mehrere zur Verlängerung eines Spacers miteinander verbunden werden können. Beispiele für nichtkovalent verknüpfbare Teile eines Spacers sind Moleküle, zwischen denen sich Affinitätsbindungen ausbilden können, wie zwischen Biotin und Avidin bzw. Streptavidin oder deren Analoga oder zwischen DIG und anti-DIG. Spacer können eine oder auch mehrere Bindungsstellen für die aufzubringenden Sonden aufweisen. Die vorstehend diskutierten heterobifunktionellen Elemente weisen etwa für Oligonucleotidsonden in der Regel eine derartige Bindungsstelle auf, während Affinitätsbindungen ausbildende Moleküle, wie Avidin oder Streptavidin, mehrere Bindungsstellen aufweisen. Letzteres kann zu einer vorteilhaften Erhöhung der immobilisierten Sonden pro Flächeneinheit führen. Spacer können auch variable Bindungsstellen aufweisen, die je nach Konfiguration unterschiedliche Bindungsmöglichkeiten bieten. Dies gilt insbesondere für Affinitätsbindungen, deren Bindungsaffinität je nach Konfiguration der beteiligten Bindungspartner variieren kann.

Bindungen zwischen der Oberfläche des Trägers und den Sonden, beispielsweise Polynucelotidtargets, können kovalent oder nichtkovalent (beispielsweise elektrostatisch oder koordinativ) sein. Kovalente Bindungen sind bevorzugt. Häufig sind die Sonden bzw. Spacer nicht direkt an die gegebenenfalls auf der Oberfläche von Natur aus vorhandenen funktionellen Gruppen gebunden. In diesen Fällen werden die vorhandenen funktionellen Gruppen zunächst modifiziert, beispielsweise unter Einführung einer zweckmäßigeren funktionellen Gruppe. Dazu sind dem Fachmann je nach Oberflächenmaterial und gewünschter Bindung geeignete Verfahren bekannt. Glasige Oberflächen erfindungsgemäßer Träger sind bevorzugt unter Ausbildung von Siloxanbindungen funktionalisiert. Dabei sind Silane, beispielsweise Trichlorsilyl- oder Trisalkoxysilylgruppen aufweisende Verbindungen, an die von Natur aus vorhandenen Hydroxylgruppen der Si-OH-Funktionalitäten gebunden. Die Sonden oder Spacer ihrerseits sind an zweckmäßigere funktionelle Gruppen gebunden, die durch die Silane bereitgestellt werden. Epoxygruppen lassen sich z.B. mit 3'-Glycidoxypropyltrimethoxysilan und Aminogruppen z.B. mit Aminopropyltriethoxysilan einführen. Diepoxide oder Cyanogenbromid können ebenfalls zur Funktionalisierung der Oberfläche eingesetzt werden. Ebenso kann die Acetalbildung aus Alkoholen mit Aldehyden oder Ketonen, wie die Thioacetalbildung oder lodothiophosphat-Verbindung zur kovalenten Bindung herangezogen werden.

An einige Oberflächen, insbesondere an spezielle Polymere, hingegen können Sonden oder Spacer ohne weitere Funktionalisierung gebunden werden. Hierzu zählen beispielsweise Aminopropylgruppen aufweisendes Polyvinylidendifluorid oder bestimmte Langmuir-Blodgett-Filme, bei denen die Kopfgruppen sogar als Spacer fungieren können.

Es können auch sogenannte Multicoatings, d.h. mehrere unterschiedliche Schichten auf den Träger aufgebracht werden.

Die Oberfläche des Trägermaterials und/oder der Beschichtungen können außerdem durch physikalische Methoden wie Plasmabehandlung oder Sputtern modifiziert werden.

Der Halter weist vorteilhaft außerdem eine Anregungs- und Detektionseinrichtung zur Untersuchung der chemischen oder biologischen Sonden oder Proben auf. Bevorzugt ist die Anregungs- und Detektionseinrichtung zwischen Antriebseinheit und dem Halter angeordnet, so dass die Bahnen oder die einzelne schraubenförmige Bahn beim Herausdrehen des Trägers aus dem Halter analysiert werden können.

Bei elektrophoretischen Messungen wird die Schraubenvorrichtung senkrecht angeordnet, die Anregungs- und Detektionseinheit wird hier im unteren Bereich des Halters angeordnet. Die Proben werden dann am oberen Ende des Trägers aufgebracht und laufen entlang eines elektrischen Potentialgefälles in einem Gel nach unten. Das Detektionssystem registriert in diesem Fall die Laufzeit der einzelnen Banden. Durch Drehen des Trägers in dem Halter können die einzelnen Kanäle oder Bahnen sequentiell untersucht werden.

Bevorzugt werden optische Untersuchungsmethoden herangezogen, wobei Chemilumineszenz- oder Fluoreszenzmessungen bevorzugt sind. Zur Fluoreszenzmessung werden die fluoreszenzmarkierten Proben vorteilhaft mit einem fokussierten Laserstrahl angeregt und das emittierte Fluoreszenzlicht mit einem Photomultiplier oder einer Photodiode detektiert. Anregung und/oder Detektion können konfokal erfolgen, um störendes Fluoreszenzlicht aus der Lösung im Kanal oder vom Träger auszublenden. Werden unterschiedliche Fluoreszenzmarker verwendet, kann die Detektion auch spektral- oder zeitaufgelöst erfolgen, so dass Aussagen über der einzelnen Anteile der gebundenen Marker möglich sind. Ist eine vollständige Integration eines Anregungs- und Detektionssystems in den Halter nicht erwünscht können auch Faseroptiken verwendet werden, um Licht von und zu einem externen Detektionssystem zu leiten. Die erfindungsgemäße Vorrichtung weist demnach bevorzugt eine Anregungs- und Detektionseinrichtung auf, die Mittel zur simultanen Emission von Licht unterschiedlicher Wellenlänge und Mittel zur simultanen Detektion von Licht unterschiedlicher Wellenlängen und/oder zur zeitaufgelösten Detektion von optischen Signalen umfaßt. Insbesondere die Variante der erfindungsgemäßen Vorrichtung, bei welcher der Träger mit radialen funktionalisierbaren Bohrungen versehen ist, eignet sich auch zur Durchführung von Absorptionsmessungen. Beispielsweise kann Licht über die Zentralbohrungen in die einzelnen radialen Bohrungen und auf einen außerhalb des zylindrischen Mantels des Trägers angeordneten Detektor geleitet werden.

Gegenstand der vorliegenden Erfindung ist schließlich auch die Verwendung der erfindungsgemäßen Vorrichtung zur DNA- oder RNA-Analytik, wobei die zu immobilisierenden biologischen Sonden oder Proben ausgewählt sind aus der Gruppe umfassend DNA, RNA, cDNA, Oligonukleotide oder PNA-Oligos.

Eine bevorzugte Verwendung richtet sich dabei auf das Screenen bzw. das Quantifizieren von Proben auf bestimmte Liganden (Target-Sequenzen), die mit hoher Affinität an immobilisierten Oligo-/Polynukleotide oder synthetische Analoga, cDNA, ccDNA, cRNA, binden. Dazu wird eine Lösung mit markierten Proben durch den Kanal entlang der schraubenförmigen Bahn des Trägers gefördert. Nicht gebundener Ligand wird durch Spülen des Kanals entfernt. Liganden, die aufgrund einer ausreichenden Affinität an die immobilisierten Sonden gebunden haben, werden beim Herausschrauben des Trägers aus dem Halter detektiert.

Als bevorzugte Verwendungen gilt auch die Hybridisierung an DNA-Spots mit immobilisierten Oligo/Polynukleotiden oder synthetischen Analoga, cDNA, ccDNA, cRNA, gegebenenfalls mit anschließender Primerextension, zum Zweck der Sequenzierung, Genexpressionsanalyse, Typisierung von Viren und Mikroorganismen, und Mutationsanalyse.

Proben können auf herkömmliche Art und Weise gewonnen werden. Gewöhnlich werden zumindest Teile interessierender Nukleinsäuren aus einer Gewebeprobe isoliert. Für genomische Untersuchungen an Eukaryoten ist jedes Gewebe geeignet, sofern es Zellkerne enthält. Blut, Lymphozyten aus peripherem Blut oder ein Buffy Coat, Haut, Haare oder Samen sind gängige Proben- quellen, aus denen sich sowohl DNA als auch RNA gewinnen läßt. Körperflüssigkeiten, wie Serum, Sputum, Urin, Peritonealflüssigkeit, Pleuralflüssigkeit oder bronchoalveoläre Lavage eignen sich zur Isolierung von Nukleinsäuren aus Viren, Bakterien oder Pilzen. mRNA dagegen kann nur aus denjenigen Zellen bzw. Geweben gewonnen werden, in denen die gewünschte mRNA transkribiert wird.

Dem Fachmann sind zahlreiche Verfahren zur Isolierung von Nukleinsäuren bekannt. Beispielhaft sollen hier nur einige wenige kurz skizziert werden.

Zur Isolierung genomischer DNA kann man die Zellen, beispielsweise unter Einwirkung von Detergentien und/oder Proteinasen, lysieren, Proteine entfernen und die DNA, beispielsweise durch Ausfällen mit bekannten organischen Lösungsmitteln, isolieren. Auch eine chromatographische Trennung, beispielsweise mit handelsüblichen Spin-Säulen, kann sinnvoll sein. Ähnliche Verfahrensmaßnahmen finden bei der Isolierung von Gesamt-RNA Anwendung. Aus dieser Gesamt-RNA kann wiederum polyadenylierte mRNA isoliert werden, indem man auf Oligo-(dT) basierende Systeme verwendet. Die Wahl eines zweckmäßigen Protokolls unterliegt fachmännischem Wissen. RNA kann anschließend durch reverse Transkription zu cDNA umgeschrieben werden. DNA oder cDNA kann durch verschiedene, dem Fachmann bekannte Methoden, amplifiziert werden.

Die Komplexität einer Probe, d.h. die Vielfalt und Sequenzlänge der in ihr enthaltenen Nukleinsäuren, kann vor der Untersuchung verringert werden, indem man diejenigen Nukleinsäuren, welche die Targets umfassen, anreichert. Soll eine Teilmenge an mRNA untersucht werden, kann man beispielsweise die gesamte mRNA mit den immobilisierten Nukleinsäure-Polymeren hybridisieren, dann mit RNase A behandeln, um einzelsträngige Regionen zu verdauen, anschließend die doppelsträngigen Hybride denaturieren, um schließlich die Nukleinsäure-Polymere entfernen, so dass ein Pool an mRNA zurückbleibt, dessen Komplementarität zu den immobilisierten Nukleinsäure-Polymeren erhöht ist. Zu demselben Zweck sind dem Fachmann weitere Verfahren bekannt, die im Rahmen der vorliegenden Erfindung angewendet werden können, wie die Verdauung doppelsträngiger Nukleinsäuren mit RNase H unter Verwendung geeigneter Hybridisierungssonden.

Die erfindungsgemäße Vorrichtung kann außerdem zur Proteinanalytik und zum sog. "Drug Screening" verwendet werden, wobei die biologischen Sonden oder Proben in diesem Fall Proteine, insbesondere Antikörper, Rezeptoren oder Liganden umfassen. Ebenso ist eine Verwendung der erfindungsgemäßen Vorrichtung zur Allergiediagnostik möglich, wobei die biologischen oder chemischen Proben in diesem Fall ausgewählt sind aus der Gruppe umfassend Antigene, Haptene oder Allergene.

Schließlich betrifft die vorliegenden offenbarung die Verwendung der erfindungsgemäßen Vorrichtung als DNA-Computer. Es wurde bereits gezeigt, dass an der Oberfläche eines Trägers immobilisierte Oligonukleotide, etwa durch spezifisches Hybridisieren mit bestimmten Proben oder durch spezifische enzymatische Verdauung, zur Lösung mathematischer Probleme herangezogen werden können. Beispielhaft sei hier auf den Übersichtsartikel von L.M. Adleman "Computing with DNA", Scientific American 279(2):54-61, 1998 verwiesen. Spezielle Anwendungen werden beispielsweise in Liu et al. "Progress toward demonstration of a surface based DNA computation: a one word approach to solve a model satisfiability problem", Biosystems 51(1-3): 25-33, 1999 oder Smith et al. "A surface based approach to DNA computation", Journal of Computational Biology, 5(2):255-267, 1998 beschrieben. Zahlreiche der dort beschriebenen Methoden lassen sich auch mit einem linearen Oligo/Polynukleotid-Array auf einem zylindrischen oder schraubenförmigen Träger der erfindungsgemäßen Vorrichtung implementieren.

Die vorliegende Erfindung wird im folgenden unter Bezugnahme auf in den beigefügten Zeichnungen dargestellte Ausführungsbeispiele ausführlicher beschrieben.

In den Zeichnungen zeigt:
- Fig. 1: eine erste Ausführungsform einer erfindungsgemäßen Vorrichtung;
- Fig. 2: eine zweite Ausführungsform einer erfindungsgemäßen Vorrichtung;
- Fig. 3: eine dritte Ausführungsform einer erfindungsgemäßen Vorrichtung;
- Fig. 4: eine vergrößerte Ausschnittsdarstellung des Sondenauftrags bei der Vorrichtung der Fig. 3;
- Fig. 5: eine dritten Ausführungsform einer erfindungsgemäßen Vorrichtung, die speziell für elektrophoretische Untersuchungen geeignet ist;
- Fig. 6: eine Aufsicht auf die Vorrichtung der Figur 5;
- Fig. 7: eine Variante eines Trägers für elektrophoretische Untersuchungen in der Aufsicht;
- Fig. 8: den Träger der Figur 7 in der Seitenansicht;
- Fig. 9: eine weitere Variante eines Trägers für elektrophoretische Untersuchungen in der Aufsicht;
- Fig. 10: den Träger der Figur 9 in der Seitenansicht;
- Fig. 11: eine weitere Variante eines Trägers der erfindungsgemäßen Vorrichtung;
- Fig. 12: eine Aufsicht auf der Träger der Figur 11;
- Fig. 13: ein Detailausschnitt des Trägers der Fig. 11 der in einem komplementären Halter angeordnet ist; und
- Fig. 14: eine Variante des Trägers der Figur 11 in einem entsprechenden Halter.

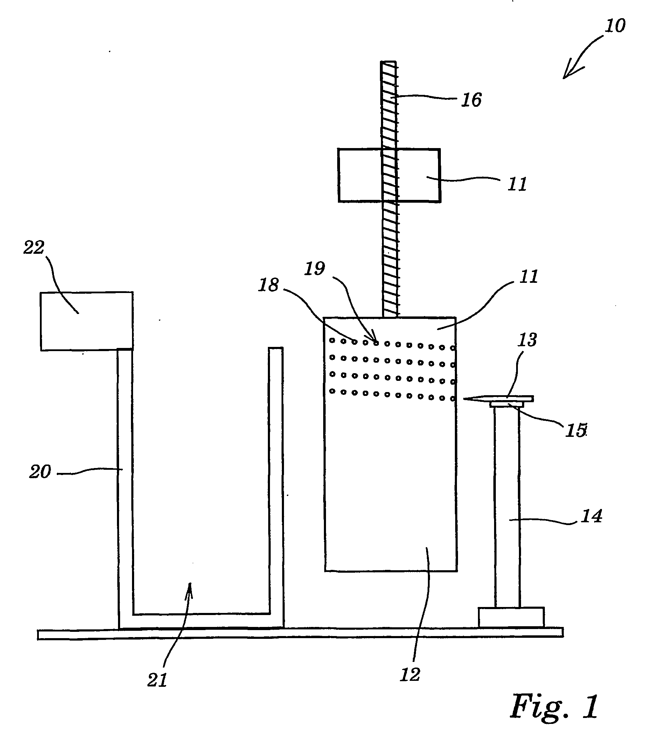

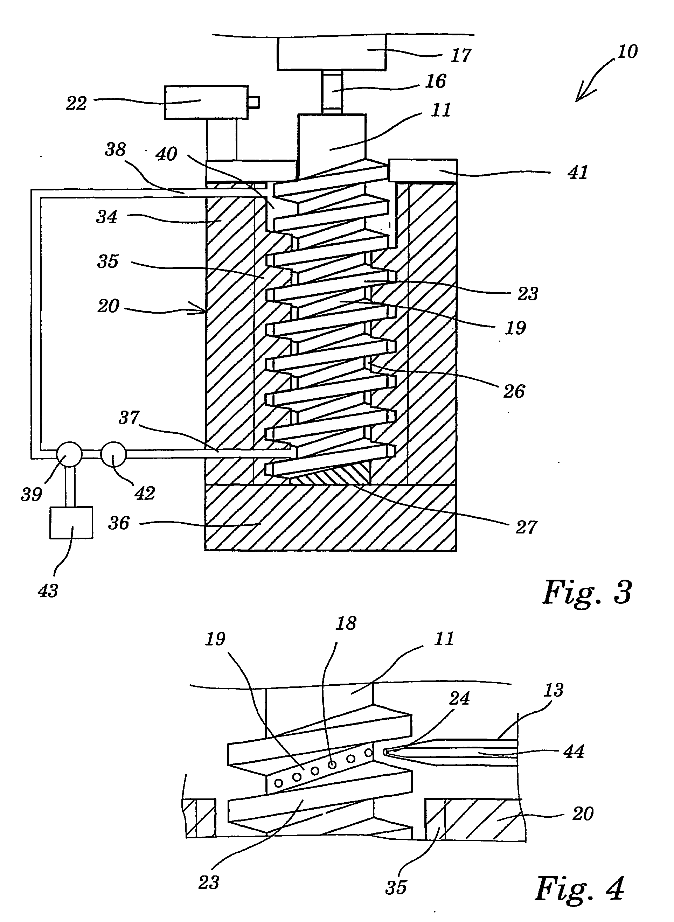

Bezugnehmend auf Fig. 1 erkennt man eine erfindungsgemäße Vorrichtung zum Analysieren von chemischen oder biologischen Proben, die in ihrer Gesamtheit mit der Bezugsziffer 10 bezeichnet ist. Die Vorrichtung 10 weist einen Träger 11 mit einer zylindrischen Mantelfläche 12 auf. Die Mantelfläche 12 ist derart funktionalisiert dass mit Hilfe einer Auftragsvorrichtung 13 chemische oder biologische Targets aufgebracht und immobilisiert werden können, wie in Fig. 4 detaillierter dargestellt ist. Bei der Auftragsvorrichtung 13 kann es sich beispielsweise um ein Röhrchen mit einer sich verjüngenden Spitze handeln, die eine Reservoir aufweist, aus der die üblicherweise in einer Flüssigkeit gelösten, dispergierten oder emulgierten, als Sonde wirkenden Substanzen beispielsweise über Kapillarkräfte an die funktionalisierte Oberfläche abgegeben werden können. Die Auftragsvorrichtung 13 kann beispielsweise auf einem dreh- und/oder verschiebbaren Arm 14 angebracht sein und mittels einer Vorschubeinrichtung 15 in Richtung Mantelfläche 12 bewegt werden.

Eine Spindel 16 eines Linearantriebs 17 (wie er beispielsweise von der Firma Haydon Switch and Instrument, Inc., vertrieben wird) ist mit dem Träger 11 verbunden, so dass dieser in eine kombinierte Rotations- und Translationsbewegung versetzt werden kann. In dieser Bewegung können mittels der Auftragsvorrichtung 13 Spots 18 entlang einer schraubenförmigen Bahn 19 auf der Mantelfläche 11 aufgebracht werden.

Die erfindungsgemäße Vorrichtung 10 umfaßt außerdem einen Halter 20, der eine im wesentlichen zylindrische Ausnehmung 21 aufweist, über der der Träger 11 mittels eines (nicht dargestellten) Roboterarms positioniert werden kann. Der Träger 11 wird mit Hilfe des Antriebs 17 in den Halter 20 eingefahren. Anschließend wird eine Probenflüssigkeit und gegebenenfalls weitere Reaktionsflüssigkeiten durch einen zwischen Mantelfläche 11 und Innenwand der Ausnehmung 21 definierten Ringkanal gefördert. Im oberen Bereich des Halters 20 können (hier nicht dargestellte) Absaugeinrichtungen vorgesehen sein, welche die Probenflüssigkeit nach Durchströmen des Ringkanals abführen.

Die Wechselwirkung der auf der Mantelfläche 11 immobilisierten Targetspots 18 und der Substanzen der Probenflüssigkeit kann beim Herausfahren des Trägers 11 detektiert werden. Dazu ist im oberen Bereich des Halters 20 eine in der Fig. 1 schematisch dargestellte Anregungs- und Detektionseinrichtung 22 vorgesehen. Das Herausfahren des Trägers 11 erfolgt durch den Antrieb 17 wieder in einer kombinierten Translations- und Rotationsbewegung, so dass alle Spots 18 der Bahn 19 an der Detektionseinrichtung 22 vorbeigeführt werden.

Vorteilhafterweise sind der Träger 11 und/oder der Halter 20 heiz- und kühlbar. Vorzugsweise ist eine Temperatur von 10 °C bis über 95 °C einstellbar, so dass mit der Vorrichtung auch Amplifikationsreaktionen, beispielsweise PCR, durchgeführt werden können.

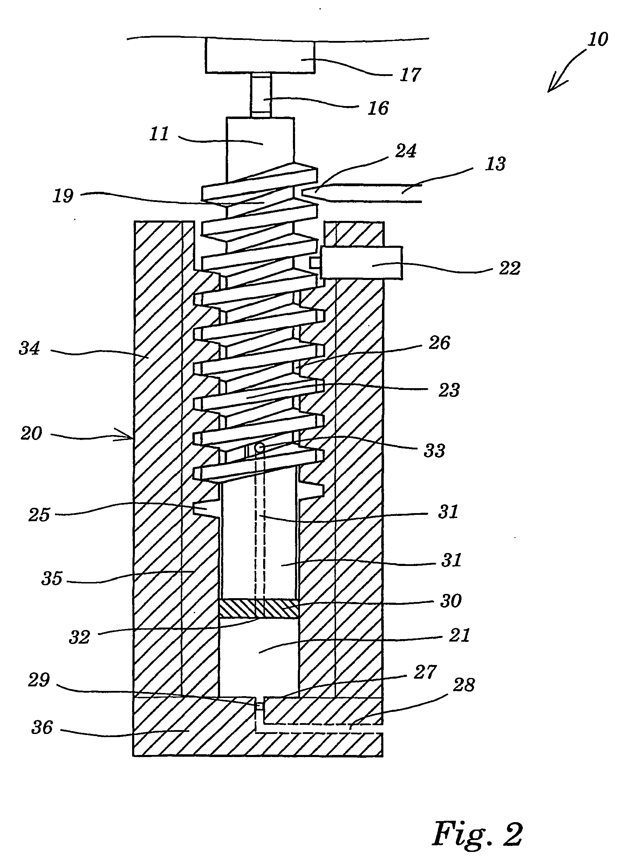

In Figur 2 ist eine zweite Ausführungsform einer erfindungsgemäßen Vorrichtung 10 dargestellt. Elemente die bereits im Zusammenhang mit der Ausführungsform der Figur 1 erläutert wurden oder eine ähnliche Funktion ausüben, sind mit denselben Bezugsziffern bezeichnet.

Die Vorrichtung der Figur 2 weist einen zylindrischen, schraubenförmigen Träger 11 auf, der auf einem Teil seiner Länge mit einem Außengewinde 23 versehen ist. Die schraubenförmige Gewindebahn 19 des Trägers 11 weist eine funktionalisierte Oberfläche auf, auf der mit Hilfe einer Auftragsvorrichtung 13 chemische oder biologische Sonden aufgebracht und immobilisiert werden können. Die Auftragsvorrichtung 13 weist eine sich verjüngenden Spitze 24 auf. Die erfindungsgemäße Vorrichtung 10 umfaßt wieder einen Halter 20, der eine im wesentlichen zylindrische Ausnehmung 21 aufweist, die mit einem zum Außengewinde 23 des Trägers 11 komplementären Innengewinde 25 versehen ist. Die Flankentiefe des Innengewindes 25 und des Außengewindes 23 ist so gewählt, dass bei eingeschraubtem Träger 11 ein schraubenförmiger Kanal 26 definiert wird. Durch den Kanal 26 kann eine Probenflüssigkeit gefördert werden, die mit den in der Gewindebahn 19 immobilisierten Sonden wechselwirken kann.

Zum Fördern der Probenflüssigkeit und gegebenenfalls weiterer Reaktionsflüssigkeiten durch den Kanal 26 weist die erfindungsgemäße Vorrichtung Mittel zum Fördern von Fluiden auf. Bei der in Fig. 2 dargestellten Ausführungsform wird die Probenflüssigkeit in die Ausnehmung 21 des Halters 20 eingefüllt. Dies kann beispielsweise vor Einschrauben des Trägers 11 durch Befüllen der Ausnehmung 21 über die Einschrauböffnung des Halters 20 geschehen. Dies kann jedoch auch durch eine im Bereich des Bodens 27 des Halters 16 in die Ausnehmung 17 mündende Fluidleitung 28 geschehen. Die Fluidleitung ist vorteilhaft mit einem Rückschlagventil 29 versehen, das beim Einschrauben des Trägers 11 eine Verdrängung der in der Ausnehmung 21 befindlichen Probenflüssigkeit in die Leitung 28 verhindert. Der Träger 11 ist nun in seinem unteren Bereich durch einen Verdrängerkolben 29 verlängert, der zur Ausnehmung 21 hin durch eine Dichtlippe 30 abgedichtet ist. Wenn der Außendurchmesser des Verdrängerkolbens 29 im wesentlichen dem Innendurchmesser der Ausnehmung 21 entspricht, kann bei geeigneter Materialwahl auch auf eine Dichtlippe verzichtet werden. Im Verdrängerkolben ist ein Durchlaß 31 ausgespart, dessen eines Ende über eine Öffnung 32 im Bodenbereich des Verdrängerkolbens 29 bzw. der Dichtlippe 30 und dessen anderes Ende über eine Öffnung 33 in die Gewindebahn 29 des Außengewindes 23 des Trägers 11 mündet. Bei eingeschraubtem Träger besteht daher eine kommunizierende Verbindung zwischen der Gewindebahn 19 und der Ausnehmung 21. Durch das Einschrauben des Trägers 11 wird die Probenflüssigkeit aus der Ausnehmung 21 durch den Durchlaß 31 gepreßt und nach Ausströmen aus der Öffnung 33 durch die Gewindebahn 19 gefördert. Es ist somit gewährleistet, dass die Probenflüssigkeit mit jedem in der Gewindebahn 19 immobilisierten Targetspot in Kontakt kommen kann.

Im oberen Bereich des Halters 20 können wieder (hier nicht dargestellte) Absaugeinrichtungen vorgesehen sein, welche die Probenflüssigkeit nach Durchströmen der Gewindebahn abführen.

Die Wechselwirkung der in der Gewindebahn 19 immobilisierten Sonden und der Substanzen der Probenflüssigkeit kann beim Herausschrauben des Trägers 11 detektiert werden. Dazu ist in dieser Ausführungsform im oberen Bereich des Halters 20 eine schematisch dargestellte Anregungs- und Detektionseinrichtung 22 vorgesehen, die hier in den Halter integriert ist.

Das Ein- und Ausschrauben des Trägers 11 erfolgt vorteilhafterweise automatisch mit Hilfe einer Antriebseinrichtung 17, die beispielsweise über eine Spindel 16 den Träger 11 in beide Drehrichtungen in Rotation versetzen kann.

Wie in der schematischen Darstellung der Fig. 2 angedeutet, kann der Halter 20 modular aufgebaut sein. Beispielsweise kann der Halter einen Außenmantel 34 aufweisen, in welchem beispielsweise Temperiereinrichtungen angeordnet sind. In den Außenmantel wird ein Innenmantel 35 eingesetzt, der ein für bestimmte Träger spezifisches Innengewinde aufweist. Ebenso kann der Halter eine auswechselbare Bodenplatte 36 aufweisen, so dass Systeme mit und ohne Fluidleitungen, bzw. mit einer oder mehreren Fluidleitungen realisierbar sind. Auch die Auftragsvorrichtung 13 und die Detektionseinrichtung 22 sind vorteilhafterweise modular aufgebaut.

In Fig. 3 ist eine dritte Ausführungsform der erfindungsgemäßen Vorrichtung 10 dargestellt.

Bei der Ausführungsform der Fig. 3 dient der schraubenförmige Träger 11 nicht als Verdränger für die Probenflüssigkeit, sondern der mit immobilisierten Sonden beschichtete Träger 11 wird zunächst vollständig in den Halter 20 eingeschraubt. Bei eingeschraubtem Träger kommuniziert eine im Bodenbereich des Halters 20 ausgesparte Fluidleitung 37 mit der Gewindebahn 19. Außerdem ist eine Abzugsleitung 38 vorgesehen, über welche Fluid über eine Pumpe 39 aus einem Auffangbereich 40 abgepumpt und über die Leitung 37 zurückgefördert werden kann. Der Halter ist im oberen Bereich 41 abgedichtet. Ein Dreiwegeventil 42 ermöglicht die Einspeisung von Probenfluid aus einem Reservoir 43.

In Fig. 4 ist eine bevorzugte Variante des Auftrags der Targetspots 18 in die Gewindebahn 19 des Trägers 11 detaillierter dargestellt. Ein die als Sonden dienenden Substanzen enthaltendes Fluid wird zunächst aus einem (nicht- dargestellten) Vorratsbehälter in einen Kanal 44 des Kapillarröhrchen 13 gesaugt. Über die Spitze 24 wird das Fluid in Form von kleinsten Tröpfchen auf den funktionalisierten Gewindegang 19 aufgebracht, um dort einzelne Spots 18 zu bilden.

Das Auftragen der Spots kann jedoch auch kontaktlos erfolgen. Dazu bringt man beispielsweise das Kapillarröhrchen nahe an den Gewindegang heran, ohne diesen jedoch zu kontaktieren und gibt einzelne Tropfen der Sondenflüssigkeit durch kurzzeitige Druckstöße ab. Diese Druckstöße können beispielsweise piezoelektrisch erzeugt werden.

Alternativ können die Sonden auch in Form von mit Kügelchen ("Beads"), auf denen die Sonden immobilisiert sind, in die Schraubenbahn gebracht werden. Die Beads, die typischerweise einen Durchmesser von 1 µm bis 1 mm besitzen, können dabei im Gewindegang festgeklebt oder zwischen den Flanken des Gewindegangs eingeklemmt werden.

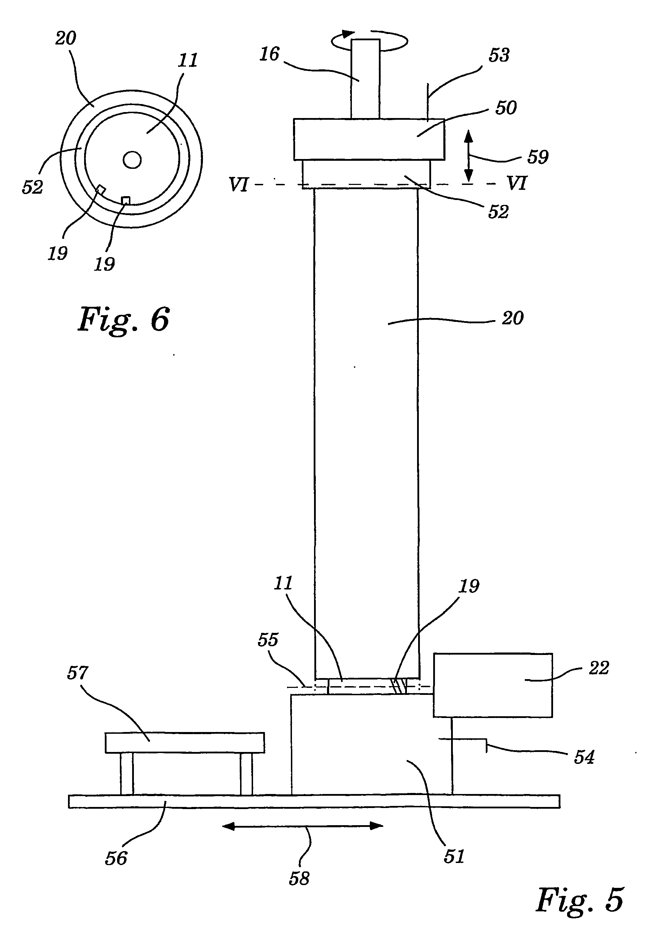

In den Figuren 5 und 6 ist eine bevorzugte Variante des Trägers 11 dargestellt, der sich insbesondere zur Durchführung von elektrophoretischen Auftrennungen eignet. Dabei zeigt Figur 6 einen Querschnitt entlang der Linie VI-VI der Fig. 5. Die Vorrichtung weist Reservoire 50, 51 für eine Pufferlösung und einen Simmering 52 zur Abdichtung zwischen Träger 11 und Halter 20 auf. Die Proben, die elektrophoretisch aufgetrennt werden sollen, werden an einem Ende des Trägers 11 als Spots auf die beispielsweise mit einem Gel gefüllten Bahnen 19 des Trägers 11 aufgebracht. Zwischen den Pufferreservoiren 50, 51 wird über - in Fig. 5 schematisch dargestellte - Elektroden 52, 54 eine elektrische Hochspannung parallel zu der Längsachse des Trägers 11 angelegt. Die einzelnen Bestandteile der Proben werden aufgrund von unterschiedlicher Ladung und/oder unterschiedlicher Beweglichkeit in dem Gel aufgetrennt, so dass sie am anderen Ende des Trägers 11, beispielsweise auf Höhe der Linie 55, zeitversetzt ankommen und von einer Detektionseinrichtung 22 nachgewiesen werden können. Im Fall einer außerhalb des Halters 20 angeordneten Detektionseinrichtung, die für einen optischen Nachweis der Probenbestandteile ausgelegt ist, kann der Halter 20 in diesem Bereich ein transparentes Fenster oder einen schmalen Spalt aufweisen. Auf einer gemeinsamen Grundplatte 56 kann über einer (hier nicht dargestellten) Ausnehmung in der Grundplatte ein Ring 57 mit einem Innengewinde angeordnet werden, um nach der Elektrophorese das Gel aus den Bahnen 19 des Trägers 11 wieder zu entfernen. Mit Pfeilen 58 und 59 ist angedeutet, dass der Träger 11 und die Grundplatte 56 über an sich bekannte (hier nicht gezeigte) Stellelemente gegeneinander beweget werden können, so dass das Einschrauben des Trägers 11 in den Ring 57 nach Beendigung der Elektrophorese auch automatisch erfolgen kann. Bei der in den Figuren 5 und 6 dargestellten Variante sind zwei Bahnen 19 auf dem Träger vorgesehen, die ein einer Spiralbahn mit relativ großer Steigung verlaufen. Die Innenwand des zylindrischen Halters 20 braucht in diesem Fall kein komplementäres Gewinde aufweisen, sondern kann auch glatt ausgebildet sein.

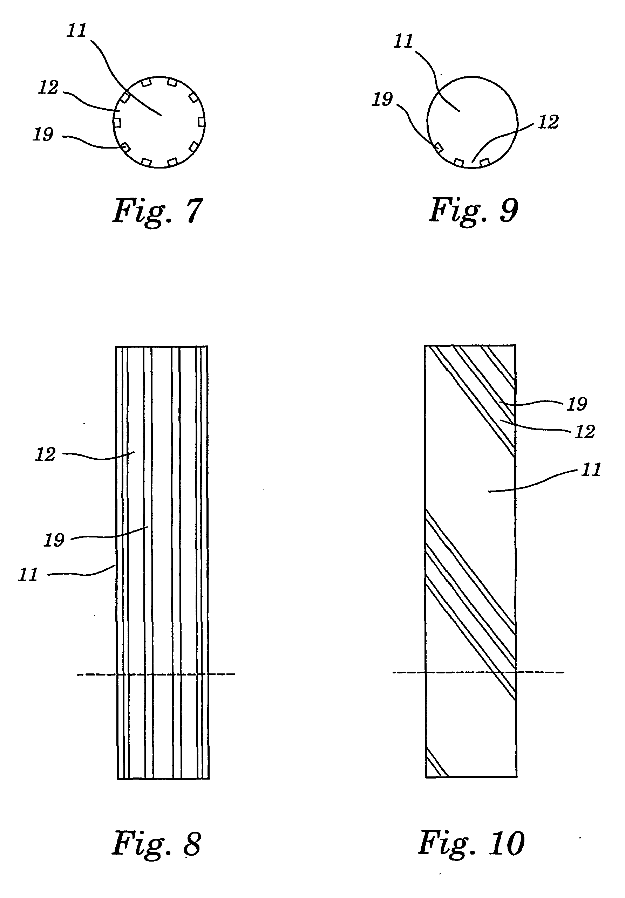

Weitere Varianten des Trägers sind in den Figuren 7-10 dargestellt.

Figur 7 zeigt eine Aufsicht und Figur 8 eine Seitenansicht einer weiteren Ausführungsform des Trägers 11. In diesem Fall sind die Bahnen 19 im wesentlichen parallel zur Längsachse des Trägers 11 angeordnet. Die Flanken, welche die Bahnen seitlich begrenzen definieren einen Zylindermantel 12 des Trägers, so dass die Bahnen 19 gewissermaßen Vertiefungen in dem zylindrischen Träger 11 darstellen. Der Träger 11 kann dann in einen (hier nicht dargestellten) Halter eingesetzt werden, der, ähnlich wie der Halter der Figur 5 oberhalb und unterhalb des Trägers mit Elektroden versehen ist. Auch hier kann der Halter in diesem Fall einen zylindrischen Innenraum mit glatten Seitenwänden aufweisen, Ein Innengewinde ist nicht erforderlich. Nach Einsetzen des Trägers in den Halter wird die elektrophoretisch aufzutrennende Probe am oberen Ende der Bahnen 19 aufgebracht und Spannung angelegt. Die auf den Bahnen 19 aufgetrennten Proben werden dann im unteren Bereich des Halters (wie durch die gestrichelte Linie angedeutet) detektiert. Die Detektion erfolgt also wiederum durch Messung von Laufzeitunterschieden der einzelnen Bestandteile der Probe auf den Elektrophoresebahnen. Während der Messung kann der Träger um seine Längsachse rotieren, um die einzelnen Bahnen nacheinander auszuwerten.

Die Figuren 9 und 10 zeigen eine Variante des Trägers der Figuren 7 und 8, bei der die Bahnen 19 gegenüber der Längsachse des Trägers geneigt sind. Auf diese Weise kann die elektrophoretisch nutzbare Laufstrecke der einzelnen Bahnen 19 vergrößert werden, ohne dass sich die Gesamtabmessungen des Systems erhöhen.

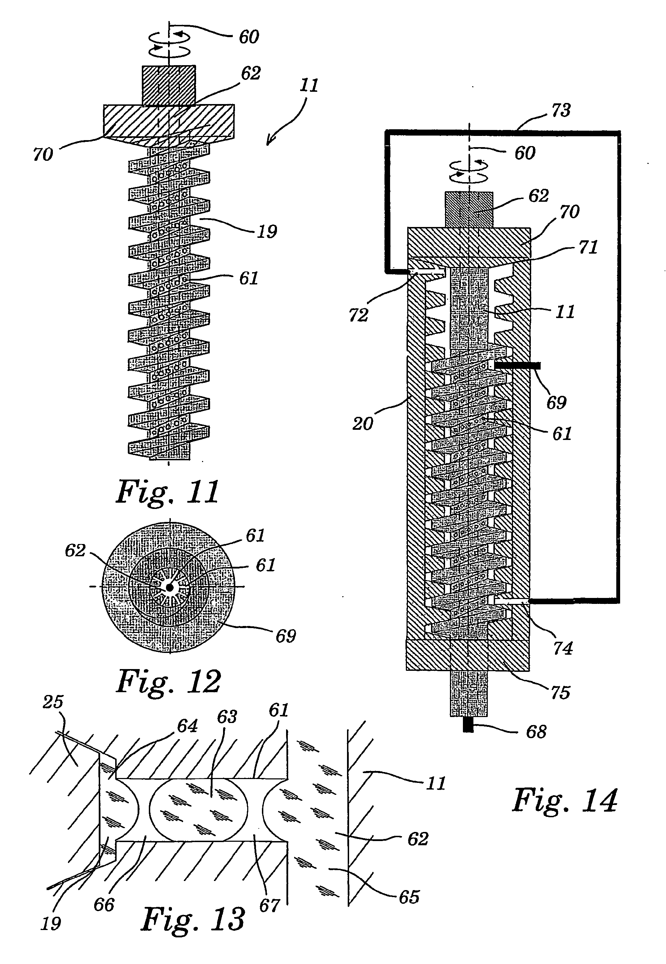

In den Figuren 11 bis 14 ist eine weitere Variante des Trägers 11 der erfindungsgemäßen Vorrichtung zum Analysieren von chemischen oder biologischen Proben dargestellt. Wiederum besitzt der Träger 11 eine schraubenförmige Allgemeinform, bei der einzelne Probenspots entlang einer schraubenförmigen Gewindebahn 19 verteilt sind. Im Gegensatz zu den vorherigen Beispielen werden die Probenspots nicht auf die Grundfläche der Gewindebahn 19 aufgebracht. Vielmehr weist der Träger 11 in der Gewindebahn 19 zahlreiche, zur Längsachse 60 des Trägers 11 radial orientierte Bohrungen 61 auf, die in eine entlang der Längsachse 60 ausgesparte Zentralbohrung 62 münden. Die radialen Bohrungen 61 stellen daher eine kommunizierende Verbindung zwischen dem Gewindegang 19 und der Zentralbohrung 62 dar, wie insbesondere auch aus der Detailansicht der Figur 13 hervorgeht. Der Durchmesser der Bohrungen 61 liegt vorzugsweise im Bereicht von 1 µm bis 1000 µm und ganz besonders bevorzugt im Bereich von 50-200 µm. Die Länge der in den Zeichnungen nicht maßstabsgetreu dargestellten Bohrungen 61 liegt typischerweise im Millimeterbereich.

Durch geeignete Kapillarnadeln oder ähnliche Auftragsvorrichtungen lassen sich die einzelnen Bohrungen 61 individuell mit einem Probenfluid befüllen, das durch Kapillarkräfte in den Bohrungen gehalten wird. Über die Gewindebahn 19 und/oder die Zentralbohrung 62 können die in der jeweiligen Bohrung 61 befindlichen Probenfluid-Tröpfchen 63 mit weiteren Fluiden in Kontakt gebracht und vermischt werden. Je nach in die einzelnen Bohrungen eindosierter Menge des Probenfluids 63 bildet sich zwischen dem in Gewindegang 19 befindlichen Fluid 64 und dem in der Zentralbohrung 62 befindlichen Fluid 65 jeweils ein Luftpolster 66 bzw. 67 aus, das zunächst eine Vermischung der Fluide verhindert. Je nach Steuerung des Druckunterschieds der Fluide in der Zentralbohrung 62 bzw. im Schraubengang 19 kann eine sequenzielle Vermischung des Probenfluids 63 mit den Fluiden 64 bzw. 65 zu definierten Zeiten bewirkt werden. In der Darstellung der Figur 13 sind die Randwinkel der Fluide so dargestellt, wie es beispielsweise einer wässrigen Flüssigkeit in einer hydrophobisierten Bohrung 61 entsprecht.

In Figur 14 ist eine beispielhafte Anordnung einer Variante des Trägers 11 aus Figur 11 in einem Halter 20 dargestellt. In der Ausführungsform der Figur 14 ist außerdem gezeigt, dass sich der Träger 11 insbesondere für Absorptionsmessungen eignet. Dazu kann beispielsweise ein Lichtwellenleiter 68 in die Zentralbohrung 62 eingeführt werden, der auf Höhe eines in den Halter 20 integrierten Detektors 69 eine abgewinkelte Facette aufweist, die Licht radial in Richtung Detektor 69 abstrahlt. Wenn die einzelnen Bohrungen 61 diesen radialen Lichtstrahl passieren, können Absorptionsmessungen des in der Bohrung befindlichen Fluids durchgeführt werden. Die Vorrichtung der Figur 14 zeigt außerdem, dass der Halter 11 mit einem konisch verlaufenden Stopfen 70 versehen sein kann, der komplementär zum oberen Rand 71 des Halters 20 ausgebildet ist und diesen bei eingeschraubtem Träger dicht verschließt. Eine derartige Abdichtung des Halters 20 kann selbstverständlich bei den zuvor unter Bezugnahme auf die Figuren 1-10 beschriebenen Ausführungsformen der erfindungsgemäßen Vorrichtung realisiert sein.

Der Stopfen Stopfen 70 kann auch als mit dem Halter 20 beispielsweise über eine Überwurfmutter oder eine Gewinde verbindbarer Simmering ausgebildet sein, in welchem der Schaft des Trägers 11 frei drehbar ist, so dass man den Träger 11 bei dicht verschlossenem Halter an dem Detektor 69 vorbeibewegen kann. Um Druckschwankungen in der Flüssigkeit bei einer Bewegung des Trägers 11 im komplementären Gewinde des Halters 20 zu verhindern, kann der Halter 20 im oberen Bereich einen Auslass 72 aufweisen, der über eine Ausgleichsleitung 73 mit einem Einlass 74 im unteren Bereich des Halters verbunden ist. Der untere Bereich des Halters 20 wird dann wiederum als Simmering 75 ausgebildet.

Die Ausführungsform der erfindungsgemäßen Vorrichtung gemäß Figuren 11-14 eignet sich insbesondere für Stopped-flow-Experimente mit hoher Zeitauflösung und hoher Statistik. In diesem Fall kann man beispielsweise identische Proben in die Bohrungen 61 einbringen und durch Anlegen von Druck zu einem definierten Zeitpunkt eine Reaktion starten. Da die Reaktion in allen Bohrungen 61 zur gleichen Zeit beginnt, stellt eine sequenzielle Auswertung der einzelnen Bohrungen (beispielsweise beim Herausdrehen des Trägers 11 aus dem Halter 20) eine zeitaufgelöste Messung der Reaktionskinetik dar. Ebenso ist es möglich, hochparallele Stopped-flow-Experimente durchzuführen, beispielsweise wenn verschiedene Proben in die einzelnen Bohrungen eingebracht werden.

Insbesondere eignet sich die erfindungsgemäße Vorrichtung auch für die Durchführung von Mischungsassays mit zwei oder mehr unterschiedlichen Reaktionslösungen.

Auch die Durchführung von sogenannten Hot-Start-Experimenten ist durch zeitgleiche Vermischung über die durch Druckpulse ausgetriebenen Luftpolster möglich.

Ein weiteres bevorzugtes Anwendungsgebiet der Vorrichtung der Figuren 11-14 liegt im Bereich der sogenannten Flush-through-Assays oder -Arrays. Durch Immobilisierung einer größeren Probenmenge auf der Innenwand der Bohrungen 61 und einen sensitiven Nachweis durch einen langen Detektionsweg in der Bohrung, beispielsweise bei Absorptionsmessungen, ist eine Erhöhung der Sensitivität bei derartigen Experimenten möglich.

Die zentrale Bohrung kann beim Träger der Figur 11 auch durch einen (in den Zeichnungen nicht dargestellten) einschiebbaren Kern verschlossen werden, so dass der Träger 11 als eine Art Mikrotiterplatte (bzw. Submikrotiterplatte) mit schraubenförmig angeordneten Kavitäten ausgebildet ist. In diesem Fall entspricht der Außendurchmesser des (ggf. beheizbaren) Kerns im wesentlichen dem Innendurchmesser der Bohrung 62. Selbstverständlich kann der Kern auch einen etwas geringeren Durchmesser besitzen, so dass die Zentralbohrung 62 nicht vollständig, sondern lediglich in einem schmalen Ring (in den Zeichnungen nicht dargestellten) Kern und der Innenwand der Bohrung 62 mit Fluid befüllt werden muss.

Da durch einen Mediumwechsel innerhalb der Zentralbohrung 62 ein schneller und effizienter Temperaturwechsel in der Gewindebahn 19 und den radialen Bohrungen 61 erreicht werden kann, erlaubt eine spezielle Beladung der Bohrungen 61 auch die Durchführung einer hochparallelen, schnellen und effektiven PCR (polymerase chain reaction). Hierzu wird über die Zentralbohrung 62 bzw. den Zentralkanal, der so beschaffen sein kann, dass er wenige Mikroliter oder noch darunter bis zu mehreren Millilitern fassen kann, der PCR-Reaktionsmix in die Kavitäten vorgelegt. Dieser besteht bei einer herkömmlichen PCR aus Pufferlösung, DNA-Polymerase, einem DNA-Primerset und aus den zum Aufbau der Gegenstränge notwendige dNTPs. Bei der quantitativen PCR (Taq Man^{®}, Marke der Fa. Applied Biosystems, Foster City, CA) wird ein spezielles Primerpaar verwendet, das jeweils unterschiedliche Farbstoffmarker trägt, die in Lösung bzw. in der Annealingphase eine andere Fluoreszenzcharakteristik zeigen als nach der Strangduplizierung, die Auskunft über den Fortschritt der PCR gibt. Ein einfacheres Prinzip ist die durch die PCR entstandenen Produkte direkt durch Interkalationsfarbstoffe nachzuweisen. Um den Status der PCR zu erfassen, wird lediglich die Fluoreszenzintensität gemessen. Zum Zuführen der Template DNA, das ist die jeweils zu amplifizierende Sequenz, wird in die mit PCR-Lösung gefüllte Bohrungen 61 einpipettiert und anschließend der Druck in der Zentralbohrung reduziert, um ein Zurückziehen des PCR-Gemisches in die Kavität zu erreichen. Damit wird nach Durchpumpen von Flüssigkeit (z.B. deionisiertes Wasser) im Gewindekanal 19 eine Luftblase am Ende der Bohrung 21 zur Gewindebahn eingeschlossen, die eine Verdünnung oder Kontamination des PCR-Gemisches in den Gewindekanal verhindert. Nun kann das Temperaturzyklieren beginnen. Für die Quantitative PCR werden nach jedem Zyklus die Kavitäten an einem in den Halter 22 integrierten Fluoreszenzdetektor vorbeigefahren und die augenblickliche Fluoreszenzintensität gemessen und gespeichert. Durch kurze Pulsungen über die Zentralflüssigkeit kann eine Durchmischung verstärkt und evtl. Reaktivität bzw. Reaktionszeiten verkürzt werden. Zu präparativen Zwecken kann nach Abpumpen der Flüssigkeit im Gewindegang und Ausfahren der Schraube aus dem Halter die amplifizierte DNA-Lösung entnommen werden.

Obwohl ein Träger mit Zentralbohrung 62 und radialen Bohrungen 61 hier lediglich für den Fall eines schraubenförmigen Trägers 11 dargestellt wurde versteht sich, dass prinzipiell auch die zuvor dargestellten Varianten des Trägers 11, beispielsweise diejenigen der Figuren 5-9, anstelle der Spots 18 mit radialen Bohrungen versehen werden können, die in einer Zentralbohrung münden.

Im folgenden wird ein in sämtlichen Ausführungsformen der erfindungsgemäßen Vorrichtung durchführbares Anwendungsbeispiel detaillierter erläutert.

### Beispiel: Hybridisierung von DNA-Arrays:

### Anlagenparameter:

Bei einem gewählten Trägerradius von 5 mm und einer Kanalbreite von 50µm und der Gewindesteigung von 0.1 ergeben sich pro Umdrehung 32 mm Kanallänge. Es können in solch einen Kanal 320 Targets pro Umdrehung eingebracht werden, was bei einem Gewindestab von 1 Zentimeter Länge 32.000 Spots ergibt. Die übliche Länge beträgt mehrere Zentimeter, so dass einige hunderttausend Proben abgelegt werden können. Die Spotlängendichte liegt bei 20 pro Kanalzentimeter. Das Kanalvolumen ergibt sich bei einer üblichen Kanalhöhe von 10µm zu 15µl pro Zentimeter Kanallänge.

### Vorbereitung des Systems, Hybridisierung und Auslesung der Fluoreszenz:

Der Träger ist in den Halter eingefahren. Das Träger-Haltergewindesystem wird mit entgastem bidestilliertem, sterilfiltriertem durchspült. Anschließend wird mit einer Lösung. 70%-30% Ethanol-Wasser nachgewaschen, um Mikrogasblasen zu entfernen und um Sterilität zu erreichen. Danach werden Kopplungsreagenzien durch den Kanal gespült, der Kanal dadurch entsprechend dem Trägermaterial funktionalisiert. Universell ist der Einsatz von Nitrocellulosemethanolösung (NC-Lösung). Nach Durchleitung der NC-Lösung wird der Träger aus dem Halter ausgefahren. Dabei kann ein passender Dorn in die Kanalbahn eingefahren werden, um eine definierte Auftragedicke zu erzeugen. Nach Abtrocknen der Bahnen wird beim Einfahren des Trägers das Auftragen von DNA-Targets (Spotting) durchgeführt. Hierzu wird momentan die Solid-Pin-Technologie genutzt. Hierzu werden mehrere Pins in einer Reihe angeordnet benutzt. Die Pins sitzen in einem Abstand von ca. 4,5 Millimeter, angepaßt auf den jeweiligen Kanalabstand, so dass ein problemloses einfahren in die Kanalbahn gewährleistet ist. Schließt der Träger den Halter nach dem Einfahren dicht ab, wird 100% Ethanol eingeleitet. Anschließend wird mit Pufferlösung das Ethanol verdrängt, wodurch eine blasenfreie Puffereinleitung ermöglicht wird. Nun setzt die Temperierung des Träger-Haltersystems ein - dabei werden Temperaturen im Bereich von 20-68°C in Abhängigkeit der DNA-Targetlänge eingestellt. Sonden-DNA wird jetzt eingepumpt und dabei hybridisiert (siehe unter A. und B.).
Nach der Hybridisierung wird wieder mit Puffer gewaschen und danach wird der Träger aus dem Halter ausgefahren. Dabei wird die Kanalbahn mit einem ortsfesten, ultrasensitiven Fluoreszenzdetektionssystem ausgelesen und von einem Datensystem erfaßt. Zur Auswertesicherheit werden von einer Targetsequenz mehrere, in der Regel zwei Spots aufgetragen, die um eine variable, dem Auswertealgorithmus bekannte Distanz aufgetragen. Beim Auswerten werden die Spots mit identischer DNA verglichen und damit die Güte und Reproduzierbarkeit der Hybridisierung getestet. Ist die Güte nicht in einem festgesetzten Bereich, wird dieser Spot für die weitere Auswertung gesperrt. So wird selektiv eine hohe Datenqualität realisiert.

Um den Träger einem erneuten Analysezyklus zuzuführen, wird der Träger in den Halter eingefahren und mit einer Reinigungslösung (Bleach) durchspült. Anschließend wird mit Wasser und Puffer gewaschen und der pH-Wert gemessen. Bei Bedarf kann die Kanalbahn auch mechanisch mit einem Dorn gereinigt werden. Zur Sicherheit wird die Kanalbahn vor einem erneuten Analysevorgang noch durch das Detektionssystem optisch gescannt und die Qualität der Kanalbahn festgestellt, ggf. wird ein erneuter Reinigungszyklus nötig.

### A. Sondenmarkierung

Gesamt -RNA wurde präpariert (Chomczynski P. and Sacchi N, Anal. Biochem. 1987 162(1), 156 - 159) und zur Isolation von poly(A)-RNA mittels (Oligo dT)-Dynabeads (Dynal AS, Oslo, Norwegen) gemäß der Anleitung des Herstellers eingesetzt. Zum Primer-Annealing wurden 2 µg der so erhaltenen poly(A)-RNA mit 6 µl oligo(dT)₂₁ (50 µmol/l; ARK Scientific Biosystems GmbH, Darmstadt) mit DEPC-behandeltem Wasser auf 15 µl aufgefüllt, für 5 Min. auf 70 °C erhitzt und auf Eis abgekühlt. Dann wurden 6 µl 5x Erststrang-Puffer (Life Technologies GmbH, Karlsruhe; 250 mmol/l Tris-HCl pH 8,3; 375 mmol/l KCl; 15 mmol/l MgCl₂), 1 µl RNase-Inhibitor (Roche Molecular Biochemicals, Mannheim), 100 mmol Dithiothreitol (Life Technologies GmbH, Karlsruhe), 0,6 µl 50x dNTP-T (je 25 mmol/l dATP, dCTP und dGTP; 10 mmol/l dTTP; Roche Molecular Biochemicals, Mannheim), 2 µl Cy3-dUTP oder Cy5-dUTP (1 mmol/l; Amersham-Pharmacia Biotech Europe GmbH, Freiburg), 2 µl Superscript II (200 Einheiten/µl; Life Technologies GmbH, Karlsruhe) hinzugefügt. Die Synthese fluoreszenzmarkierter Erststrang-cDNA erfolgte für 2 Std. bei 42°C im vorgeheizten Thermocycler. Zur RNA-Denaturierung wurden 2,5 µl 1 N NaOH hinzugefügt und für 10 Min. auf 65°C erwärmt. Nach Abkühlung auf Eis wurde mit 6,2 µl 1mol/l Tris-HCI pH 7,5 neutralisiert, mit TE-Puffer (10 mmol/l Tris-HCI, 1 mmol/l EDTA, pH 8,0) auf 400 µl verdünnt und auf einer Microcon-30 Säule (Millipore GmbH, Eschborn; Zentrifugation 10 Min. bei 13.000 rpm) auf 10 µl eingeengt.

### B. Hybridisierung

Zur Hybridisierung wurden je 5 µl Cy 3- und Cy 5-markierter cDNA miteinander vermischt und mit 50 µl Hybridisierungspuffer (0,25x SSC, 0,02% SDS, 1 % N-Lauroylsarcosin, 1 % Blocking-Reagenz (Roche Molecular Biochemicals, Mannheim), 1 µg humaner Cₒₜ1-DNA (Life Technologies GmbH, Karlsruhe)) versetzt. Diese Hybridisierungslösung wurde im Thermocycler 2 Min. bei 95°C denaturiert, dann wurde die Temperatur auf 50°C reduziert und 14 Std. hybridisiert. Die Hybridisierungslösung wurde entfernt, und die Gefäße wurden 3x 5 Min. bei Raumtemperatur mit 2x SSC/0,1% SDS gewaschen, gefolgt von 3x 5 Min. mit 0,2x SSC/0,1% SDS bei 42°C und abschließend 1x 5 Min. mit 0,1x SSC/0,1% SDS bei 42°C.

## Patentansprüche

1. Vorrichtung zum Analysieren von chemischen oder biologischen Proben mit
einem Träger, der eine im wesentlichen zylindrische Mantelfläche aufweist, in der auf wenigstens einem Teil ihrer Fläche wenigstens eine schraubenförmig vertiefte Gewindebahn ausgespart ist, die derart funktionalisiert ist, dass chemische oder biologische Proben und/oder Targets in der Gewindebahn aufgebracht werden können, und
einem Halter, der eine im wesentlichen zylindrische, zu dem Träger im wesentlichen komplementäre Ausnehmung aufweist, in welche der Träger einführbar ist, so dass zwischen dem Träger und der Innenfläche der Ausnehmung des Halters wenigstens ein Kanal mit definiertem Reaktionsvolumen gebildet wird.

2. Vorrichtung gemäß einem der Anspruch 1, **dadurch gekennzeichnet, dass** außerdem Mittel zur chemischen oder physikalischen Beeinflussung der in der funktionalisierten Gewindebahn aufgebrachten Proben und/oder Targets vorgesehen sind.

3. Vorrichtung gemäß einem der Ansprüche 1 oder 2, **dadurch gekennzeichnet, dass** außerdem Mittel zum Analysieren der Proben und/oder Targets vorgesehen sind.

4. Vorrichtung gemäß Ansprüche 3, **dadurch gekennzeichnet, dass** der Halter eine Anregungs- und Detektionseinrichtung zur Untersuchung der chemischen oder biologischen Targets und/oder Sonden aufweist.

5. Vorrichtung gemäß Anspruch 4, **dadurch gekennzeichnet, dass** die Anregungs- und Detektionseinrichtung in den Halter integriert ist.

6. Vorrichtung gemäß Anspruch 5, **dadurch gekennzeichnet, dass** die Anregungs- und Detektionseinrichtung am Eingang außerhalb der Ausnehmung des Halters angeordnet ist.

7. Vorrichtung gemäß einem der Ansprüche 4 bis 6, **dadurch gekennzeichnet, dass** die Detektionseinrichtung Mittel zur Messung von Chemilumineszenzsignalen, von Fluoreszenzsignalen, von Absorptionssignalen oder von Radioaktivität aufweist.

8. Vorrichtung gemäß einem der Ansprüche 1 bis 7, **dadurch gekennzeichnet, dass** außerdem eine Antriebseinrichtung zum Einfahren des Trägers in den Halter und zum Ausfahren des Trägers aus dem Halter vorgesehen ist.

9. Vorrichtung gemäß einem der Ansprüche 1 bis 8, **dadurch gekennzeichnet, dass** außerdem Mittel zum Fördern von Fluiden durch den zwischen Träger und Halter definierten Kanal vorgesehen sind.

10. Vorrichtung gemäß Anspruch 9, **dadurch gekennzeichnet, dass** die Mittel zum Fördern von Fluiden wenigstens ein Fluidreservoir und eine Pumpeinrichtung umfassen.

11. Vorrichtung gemäß Anspruch 10, **dadurch gekennzeichnet, dass** die Mittel zum Fördern von Fluiden von dem als Kolben wirkenden Träger und der als Fluidreservoir dienenden Ausnehmung des Halters gebildet werden.

12. Vorrichtung gemäß Anspruch 11, **dadurch gekennzeichnet, dass** der Träger stirnseitig einen gewindelosen zylindrischen Abschnitt umfasst, dessen Außendurchmesser im wesentlichen dem Innendurchmesser der Ausnehmung des Halters entspricht.

13. Vorrichtung gemäß Anspruch 12, **dadurch gekennzeichnet, dass** in dem gewindelosen zylindrischen Abschnitt ein Durchlass ausgespart ist, der einerseits mit dem Gewindegang des Trägers und andererseits, bei eingeführtem Träger, mit der Ausnehmung des Halters kommuniziert.

14. Vorrichtung gemäß einem der Ansprüche 1 bis 13, **dadurch gekennzeichnet, dass** radiale Bohrungen in der Mantelfläche des Trägers ausgespart sind, die mit einer in dem Träger vorgesehenen Zentralbohrung kommunizieren.

15. Vorrichtung gemäß einem der Ansprüche 1 bis 14, **dadurch gekennzeichnet, dass** die Innenwand der zylindrischen Ausnehmung des Halters glatt ist.

16. Vorrichtung gemäß einem der Ansprüche 1 bis 15, **dadurch gekennzeichnet, dass** die Innenwand der zylindrischen Ausnehmung des Halters ein komplementäres Gegengewinde aufweist, das so ausgestaltet ist, dass nach Einschrauben des Trägers in den Halter entlang der Gewindebahn ein Kanal gebildet wird, durch den Fluid gefördert werden kann.

17. Vorrichtung gemäß Anspruch 16, **dadurch gekennzeichnet, dass** die Gewindebahn ein im wesentlichen rechteckiges oder trapezförmiges Gewindeprofile besitzt oder als metrisches ISO-Gewinde, Rundgewinde oder Rohrgewinde ausgebildet ist.

18. Vorrichtung gemäß einem der Ansprüche 1 bis 17, **dadurch gekennzeichnet, dass** die Vorrichtung einen Vorrat an chemischen oder biologischen Proben und/oder Targets umfasst.

19. Vorrichtung gemäß einem der Ansprüche 1 bis 18, **dadurch gekennzeichnet, dass** Mittel zum Aufbringen der chemischen oder biologischen Proben und/oder Targets auf die funktionalisierte Gewindebahn des Trägers vorgesehen sind.

20. Vorrichtung gemäß einem der Ansprüche 1 bis 19, **dadurch gekennzeichnet, dass** die chemischen oder biologischen Proben und/oder Targets in Form definierter Spots in der Gewindebahnen aufgebracht werden.

21. Vorrichtung gemäß einem der Ansprüche 1 bis 19, **dadurch gekennzeichnet, dass** die chemischen oder biologischen Proben und/oder Targets in Form einer kontinuierlichen Belegung in die Gewindebahnen aufgebracht werden.

22. Vorrichtung gemäß einem der Ansprüche 1 - 21, **dadurch gekennzeichnet, dass** die Gewindebahn mit einem Gel gefüllt ist.

23. Vorrichtung gemäß Anspruch 22, **dadurch gekennzeichnet, dass** Mittel zur elektrophoretischen Trennung der Proben und/oder Targets vorgesehen sind.

24. Verwendung der Vorrichtung nach einem der Ansprüche 1 bis 23 zur DNA- oder RNA-Analytik.

25. Verfahren zum Analysieren von chemischen oder biologischen Proben unter Verwendung einer Vorrichtung nach einem der Ansprüche 1 bis 23, wobei man
chemische oder biologische Proben und/oder Targets in Form von einzelnen definierten Spots in eine in der äußeren zylindrischen Mantelfläche des Trägers ausgesparte schraubenförmig vertiefte funktionalisierte Gewindebahn einbringt;
den Träger in eine zu der zylindrischen Mantelfläche im wesentlichen komplementäre Ausnehmung eines Halters einführt,
die Proben und/oder Targets chemisch oder physikalisch beeinflusst, und
die Spots anschließend analysiert

26. Verfahren gemäß Anspruch 25, **dadurch gekennzeichnet, dass** man den Träger zum Aufbringen der Spots in einer kombinierten Translations- und Rotationsbewegung an einer Aufgabeeinrichtung vorbeiführt.

27. Verfahren gemäß Anspruch 26, **dadurch gekennzeichnet, dass** man den Träger beim Aufbringen der Spots in den Halter einführt.

28. Verfahren gemäß Anspruch 27, **dadurch gekennzeichnet, dass** man den Träger zum Analysieren der Spots in einer kombinierten Translations- und Rotationsbewegung an einem Detektionseinrichtung vorbeiführt.

29. Verfahren gemäß Anspruch 28, **dadurch gekennzeichnet, dass** man den Träger beim Analysieren der Spots aus dem Halter entfernt.

30. Verfahren gemäß einem der Ansprüche 25 bis 29, **dadurch gekennzeichnet, dass** man
den Träger in den mit einem entsprechenden Gegengewinde versehenen Halter einschraubt und dabei chemische oder biologische Proben und/order Targets in Form von definierten Spots aufbringt,
wenigstens ein Probenfluid durch einen entlang der Gewindebahn definierten Kanal fördert,
den Träger wieder aus dem Halter herausschraubt und dabei Wechselwirkungen zwischen den Spots und dem Probenfluid detektiert.

31. Verfahren gemäß Anspruch 30, **dadurch gekennzeichnet, dass** man das Probenfluid aus der Ausnehmung des Halters durch Verdrängerwirkung des Trägers durch den Kanal fördert.

32. Verfahren gemäß einem der Ansprüche 25 bis 31, **dadurch gekennzeichnet, dass** man die Targets in der Gewindebahn des Trägers immobilisiert.

33. Verfahren gemäß Anspruch 32, **dadurch gekennzeichnet, dass** man DNA- oder RNA-Targets auf dem Träger immobilisiert und mit in dem Probenfluid enthaltenen DNA- oder RNA-Proben hybridisiert.

34. Verfahren gemäß einem der Ansprüche 25 bis 33, **dadurch gekennzeichnet, dass** man fluoreszenzmarkierte Proben verwendet.

35. Verfahren gemäß einem der der Ansprüche 25 bis 34, wobei man
chemische oder biologische Proben und/oder Targets auf definierte Bereiche von wenigstens einer gelbeschichteten Gewindebahn aufbringt,
nach dem Einführen des Trägers in den Halter die in den chemischen oder biologischen Proben und/oder Targets enthaltenen Substanzen elektrophoretisch voneinander trennt und
anschließend die aufgetrennten Substanzen detektiert.

## Claims

1. A device for analyzing chemical or biological samples, comprising
a support having an essentially cylindrical jacket surface, on at least a part of surface thereof at least one helically recessed threaded track is provided which is functionalized such that chemical or biological targets and/or samples can be applied in the threaded track, and
a retainer having an essentially cylindrical recess which is complementary to said support, said support being insertable into said retainer such that at least one fluid channel having a defined a reaction volume is formed between said support and an inner surface of said recess.

2. The device as claimed in claim 1, comprising means of acting chemically or physically upon said samples and/or targets.

3. The device as claimed in one of claims 1 or 2, further comprising means of analyzing samples and/or targets.

4. The device as claimed in claim 3, wherein said retainer comprises an excitation and detection device for analyzing said chemical or biological targets and/or samples.

5. The device as claimed in claim 4, wherein said excitation and detection device is integrated into said retainer.

6. The device as claimed in claim 5, wherein said excitation and detection device is arranged at the entrance outside the recess of the retainer.

7. The device as claimed in one of claims 4 to 6, wherein the detection device comprises means for measuring chemiluminescence signals, fluorescence signals, absorption signals or radioactivity.

8. The device as claimed in one of claims 1 to 7, comprising drive means for inserting the support into the retainer and for withdrawing the support from the retainer.

9. The device as claimed in one of claims 1 to 8, comprising means for conveying fluids through said channel defined between said support and said retainer.

10. The device as claimed in claim 9, wherein said means for conveying fluids comprise at least one fluid reservoir and one pumping device.

11. The device as claimed in claim 10, wherein said means for conveying fluids are formed by said support, acting as a piston, and said retainer recess, serving as the fluid reservoir.

12. The device as claimed in claim 11, wherein said support comprises, at its front side, a threadless cylindrical section, with the outer diameter of said section essentially corresponding to the inner diameter of said retainer recess.

13. The device as claimed in claim 12, wherein a passage is provided in said threadless cylindrical section, said passage communicating with said thread of said support and with said recess of said retainer, when the support is inserted into said retainer.

14. The device as claimed in one of claims 1 to 13, wherein radial drill holes are provided in the jacket surface of the support which communicates with a central drill hole provided in the support.

15. The device as claimed in one of claims 1 to 14, wherein said cylindrical recess if the container is provided with a smooth inner wall.

16. The device as claimed in one of claims 1 to 14, wherein the inner surface of the cylindrical recess of said retainer is provided with a complementary counter-thread which is designed such that, after the support has been screwed into the retainer, a channel is formed along the threaded track through which fluid can be conveyed.

17. The device as claimed in claim 16, wherein the thread of said thread track is selected form the group consisting of rectangular threads, trapezoidal threads, metric ISO threads as defined by the International Organization for Standardization, round threads and pipe threads.

18. The device as claimed in one of claims 1 to 17, wherein said device comprises a supply of chemical or biological samples.

19. The device as claimed in one of claims 1 to 18, wherein means are provided for applying said chemical or biological samples and/or targets onto said functionalized threaded track of said support.

20. The device as claimed in one of claims 1 to 19, wherein said chemical or biological samples and/or targets are applied onto said threaded track in the form of defined spots.

21. The device as claimed in one of claims 1 to 19, wherein said chemical or biological samples and/or targets are applied into said threaded track in the form of a continuous layer.

22. The device as claimed in one of claims 1 to 21, wherein said threaded track is filled with a gel.

23. The device as claimed in claim 22, wherein means for electrophoretic separation of said samples and/or targets are provided.

24. The use of the device as claimed in one of claims 1 to 23 for analyzing DNA or RNA.

25. A method for analyzing chemical or biological samples, which comprises chemical or biological samples using a device according to one of claims 1 to 23 wherein
chemical or biological samples and/or targets are applied, in the form of individual, defined spots, to a helically recessed threaded functionalized track provided on an outer, cylindrical jacket surface of a support,
the support is inserted into a recess in a retainer, which recess is essentially complementary to the cylindrical jacket surface,
the samples and/or targets are acted upon chemically or physically and
the spots are then analyzed.

26. The method as claimed in claim 25, wherein, for the purpose of applying the spots, the support is conveyed, in a combined translatory and rotatory movement, past a loading device.

27. The method as claimed in claim 26, wherein the support is introduced into the retainer while the spots are being applied.

28. The method as claimed in claim 27, wherein, in order to analyze the spots, the support is conveyed, in a combined translatory and rotatory movement, past a detection device.

29. The method as claimed in claim 28, wherein the support is removed from the retainer while the spots are being analyzed.

30. The method as claimed in one of claims 25 to 29, wherein
the support is screwed into the retainer, which is provided with a corresponding counterthread, and the chemical or biological samples and/or target are applied concurrently in the form of defined spots,
at least one sample fluid is conveyed through a channel which is defined along the track,
the support is screwed out of the retainer again and concurrently interactions between the target spots and the sample fluid are detected.

31. The method as claimed in claim 30, wherein the sample fluid is conveyed from the recess of said retainer through said channel by means of a displacement effect of said support.

32. The method as claimed in one of claims 25 to 31, wherein the targets are immobilized in said threaded track of said support.

33. The method as claimed in claim 32, wherein DNA or RNA targets are immobilized on the support and hybridized with the DNA or RNA samples which are present in the sample fluid.

34. The method as claimed in one of claims 25 to 33, wherein fluorescence-labeled samples are used.

35. The method as claimed in one of claims 25 to 34, wherein
chemical or biological samples and/or targets are applied onto defined regions of at least one gel-coated threaded tracks,
the substances contained in said chemical or biological samples and/or targest are separated from each other electrophoretically after the support has been introduced into the retainer, and
the separated substances are subsequently detected.

## Revendications

1. Dispositif pour analyser des échantillons chimiques ou biologiques comportant
un support qui présente une chemise essentiellement cylindrique dans laquelle au moins un filetage profond hélicoïdal est taillé sur au moins une partie de sa surface, lequel est fonctionnalisé de manière à ce que des échantillons et/ou des cibles chimiques ou biologiques puissent être appliquées dans le filetage,
un logement présentant un évidement essentiellement cylindrique et essentiellement complémentaire au support, dans lequel le support peut être introduit de manière à former, entre le support et la face interne de l'évidement du logement, au moins un canal comportant des volumes de réaction définis.

2. Dispositif selon la revendication 1, **caractérisé en ce qu'**on prévoit en outre des moyens pour agir chimiquement ou physiquement sur les échantillons et/ou cibles appliqués dans le filetage fonctionnalisé.

3. Dispositif selon l'une quelconque des revendications 1 ou 2, **caractérisé en ce qu'**on prévoit en outre des moyens pour analyser les échantillons et/ou les cibles.

4. Dispositif selon la revendication 3, **caractérisé en ce que** le logement présente un dispositif d'excitation et de détection pour étudier les cibles et/ou sondes chimiques ou biologiques.

5. Dispositif selon la revendication 4, **caractérisé en ce que** le dispositif d'excitation et de détection est intégré dans le logement.

6. Dispositif selon la revendication 5, **caractérisé en ce que** le dispositif d'excitation et de détection est disposé à l'entrée, à l'extérieur de l'évidement du logement.

7. Dispositif selon l'une quelconque des revendications 4 à 6, **caractérisé en ce que** le dispositif de détection présente des moyens pour mesurer des signaux de chimioluminescence, des signaux de fluorescence, des signaux d'absorption ou la radioactivité.

8. Dispositif selon l'une quelconque des revendications 1 à 7, **caractérisé en ce qu'**on prévoit en outre un dispositif d'entraînement pour faire pénétrer le support dans le logement et sortir le support du logement.

9. Dispositif selon l'une quelconque des revendications 1 à 8, **caractérisé en ce qu'**on prévoit en outre des moyens pour acheminer des fluides à travers le canal défini entre le support et le logement.

10. Dispositif selon la revendication 9, **caractérisé en ce que** les moyens pour acheminer des fluides comportent au moins un réservoir de fluide et un dispositif de pompage.

11. Dispositif selon la revendication 10, **caractérisé en ce que** les moyens sont configurés pour acheminer des fluides depuis le support agissant comme piston et l'évidement du logement servant de réservoir de fluide.

12. Dispositif selon la revendication 11, **caractérisé en ce que** le support comporte sur le devant un tronçon cylindrique non fileté dont le diamètre extérieur correspond essentiellement au diamètre intérieur de l'évidement du logement.

13. Dispositif selon la revendication 12, **caractérisé en ce que** dans le tronçon cylindrique non fileté, il y a un passage qui communique, d'une part, avec le pas de filet du support et, d'autre part, lorsque celui-ci est à l'intérieur, avec l'évidement du logement.

14. Dispositif selon l'une quelconque des revendications 1 à 13, **caractérisé en ce que** des alésages radiaux sont pratiqués dans la chemise du support et communiquent avec un alésage central prévu dans le support.

15. Dispositif selon l'une quelconque des revendications 1 à 14, **caractérisé en ce que** la paroi intérieure de l'évidement cylindrique du support est lisse.

16. Dispositif selon l'une quelconque des revendications 1 à 15, **caractérisé en ce que** la paroi intérieure de l'évidement cylindrique du logement présente un contre-filetage complémentaire qui est configuré de manière à former un canal, le long du filetage, par lequel du fluide peut être acheminé, après avoir vissé le support dans le logement.

17. Dispositif selon la revendication 16, **caractérisé en ce que** le filetage a un profil essentiellement rectangulaire ou trapézoïdal ou bien est configuré comme un filetage métrique ISO, circulaire ou tubulaire.

18. Dispositif selon l'une quelconque des revendications 1 à 17, **caractérisé en ce que** le dispositif comporte une réserve d'échantillons et/ou de cibles chimiques ou biologiques.

19. Dispositif selon l'une quelconque des revendications 1 à 18, **caractérisé en ce qu'**on prévoit des moyens pour appliquer les échantillons et/ou cibles chimiques ou biologiques sur le filetage fonctionnalisé du support.

20. Dispositif selon l'une quelconque des revendications 1 à 19, **caractérisé en ce que** les échantillons et/ou cibles chimiques ou biologiques sont appliqués dans les filetages sous forme de spots définis.

21. Dispositif selon l'une quelconque des revendications 1 à 19, **caractérisé en ce que** les échantillons et/ou cibles chimiques ou biologiques sont appliqués dans les filetages sous forme de garniture continue.

22. Dispositif selon l'une quelconque des revendications 1 à 21, **caractérisé en ce que** le filetage est rempli d'un gel.

23. Dispositif selon la revendication 22, **caractérisé en ce qu'**on prévoit des moyens pour la séparation électrophorétique des échantillons et/ou des cibles.

24. Utilisation du dispositif selon l'une quelconque des revendications 1 à 23 pour analyser l'ADN ou l'ARN.

25. Procédé pour analyser des échantillons chimiques ou biologiques en utilisant un dispositif selon l'une quelconque des revendications 1 à 23, dans lequel
on introduit des échantillons et/ou cibles chimiques ou biologiques sous forme de spots individuels définis dans un filetage fonctionnalisé profond hélicoïdal pratiqué dans la chemise cylindrique extérieure du support ;
on introduit le support dans un évidement, essentiellement complémentaire à la chemise cylindrique, d'un logement,
on agit chimiquement ou physiquement sur les échantillons et/ou cibles et on analyse ensuite les spots.

26. Procédé selon la revendication 25, **caractérisé en ce qu'**on fait passer le support par un alimenteur pour appliquer les spots dans un mouvement translatoire et rotatif combiné.

27. Procédé selon la revendication 26, **caractérisé en ce qu'**on introduit le support dans le logement lors de l'application des spots.

28. Procédé selon la revendication 27, **caractérisé en ce qu'**on fait passer le support par un détecteur pour analyser les spots dans un mouvement translatoire et rotatif combiné.

29. Procédé selon la revendication 28, **caractérisé en ce qu'**on retire le support du logement pour analyser les spots.

30. Dispositif selon l'une quelconque des revendications 25 à 29, **caractérisé en ce qu'**
on visse le support dans le logement doté d'un contre-filetage correspondant tout en appliquant des échantillons et/ou des cibles chimiques ou biologiques en forme de spots définis,
on achemine au moins un fluide échantillon à travers un canal défini le long du filetage,
on redévisse le support du logement tout en détectant des interactions entre les spots et le fluide échantillon.

31. Procédé selon la revendication 30, **caractérisé en ce qu'**on achemine le fluide échantillon hors de l'évidement du logement par effet de déplacement du support à travers le canal.

32. Dispositif selon l'une quelconque des revendications 25 à 31, **caractérisé en ce qu'**on immobilise les cibles dans le filetage du support.

33. Procédé selon la revendication 32, **caractérisé en ce qu'**on immobilise les cibles d'ADN ou d'ARN sur le support et on hybride avec des échantillons d'ADN ou d'ARN contenus dans le fluide échantillon.

34. Dispositif selon l'une quelconque des revendications 25 à 33, **caractérisé en ce qu'**on utilise des échantillons à marquage fluorescent.

35. Dispositif selon l'une quelconque des revendications 25 à 34, **caractérisé en ce qu'**
on applique des échantillons et/ou cibles chimiques ou biologiques sur des zones définies d'au moins un filetage recouvert de gel,
on sépare l'une de l'autre par électrophorèse les substances contenues dans les échantillons et/ou cibles chimiques ou biologiques après avoir introduit le support dans le logement et
ensuite on détecte les substances clivées.
